# EUROPÄISCHE PATENTSCHRIFT

(11) **EP 3 713 738 B1**
(45) Veröffentlichungstag und Bekanntmachung des Hinweises auf die Patenterteilung: **07.05.2025**
(21) Anmeldenummer: 18810955.7
(22) Anmeldetag: 21.11.2018
(51) Int. Cl.: B29C 55/02

(54) **BELÜFTUNGSMODUL FÜR EINE FOLIENRECKANLAGE UND EINE SOLCHE FOLIENRECKANLAGE**
VENTILATION MODULE FOR A FILM STRETCHING SYSTEM AND FILM STRETCHING SYSTEM OF THIS TYPE
MODULE DE VENTILATION D'UNE INSTALLATION D'ÉTIRAGE DE FILM ET INSTALLATION D'ÉTIRAGE DE FILM DE CE TYPE

(30) Priorität: 22.11.2017 DE 102017127595
(43) Veröffentlichungstag der Anmeldung: 30.09.2020
(73) Patentinhaber: Brückner Maschinenbau GmbH, 83313 Siegsdorf (DE)
(72) Erfinder: BAUMEISTER, Michael, 83365 Nußdorf (DE); GIAPOULIS, Anthimos, 83278 Traunstein (DE); HÄUSL, Tobias, 83278 Traunstein (DE); UNTERREINER, Markus, 83250 Marquartstein (DE)
(74) Vertreter: Flach Bauer & Partner Patentanwälte mbB
(86) Internationale Anmeldenummer: PCT/EP2018/082111
(87) Internationale Veröffentlichungsnummer: WO 2019/101808

(56) Entgegenhaltungen:
- EP-A1- 2 692 508
- EP-A2- 0 414 125
- DE-A1- 102005 054 995
- DE-A1- 102005 054 995
- DE-C1- 19 623 471
- GB-A- 2 175 246
- US-A- 5 156 312
- US-A- 5 156 312

## Beschreibung

Die Erfindung betrifft ein Belüftungsmodul für eine Folienreckanlage und eine solche Folienreckanlage. Bei einer solchen Folienreckanlage handelt es sich beispielsweise um eine Längsreckanlage, eine Querreckanlage, eine sequentielle Reckanlage mit einer Längsreck-Stufe und einer Querreck-Stufe oder um eine Simultanreckanlage.

Derartige Folienreckanlagen, die zur Herstellung von Kunststofffolien dienen, werden in verschiedene Zonen unterteilt, in denen unterschiedliche Temperaturen herrschen. Um die Kunststofffolie, die auch als Film bezeichnet werden kann, entsprechenden zu temperieren, sind Belüftungsmodule notwendig. Diese Temperierung dient einerseits dazu, um gewisse Folieneigenschaften generieren oder einstellen zu können. Andererseits kann durch Temperierung der Kunststofffolienbahn diese auch verfahrenstechnisch gestreckt, also (längs- und/oder quer-) gereckt werden. Eine solche Folienreckanlage umfasst dabei mehrere derartige Belüftungsmodule, die in Transportrichtung der Kunststofffolienbahn, also in Abzugsrichtung, beabstandet voneinander angeordnet sind. Die Belüftungsmodule umfassen dabei Belüftungsdüsen, die zum Temperieren der Kunststofffolienbahn dienen. Die Belüftungsdüsen werden auch als Ausblasdüsen, bzw. Ausblasdüsenanordnungen bezeichnet.

Grundsätzlich ist man bestrebt, die Belüftungsdüsen so nahe wie möglich an die Kunststofffolienbahn heranzuführen, damit der Wärmeübergang möglichst gut ist. In der Praxis ist diese Möglichkeit allerdings durch das Transportsystem limitiert, weil dieses die Kunststofffolienbahn zwischen den Ausblasdüsen hindurch transportiert. Die Transportsystemhöhe, sowie ein geeigneter Sicherheitsabstand geben dann den Abstand der Ausblasdüsen zu der Kunststofffolienbahn vor.

Eine Möglichkeit, die Ausblasdüsen näher an die Kunststofffolienbahn heranzuführen, gelingt durch Einsatz von teleskopierbaren Düsenaufsätzen. Diese Lösung ist allerdings teuer und wird daher selten umgesetzt. Da das Transportsystem auch in der Breite verstellbar sein soll (die Reckbreite soll einstellbar sein) müssen diese Düsenaufsätze mitverstellt werden. Derartige Düsenaufsätze sind mechanisch aufwendig und daher kostenintensiv.

Aus dem Stand der Technik sind verschiedene Belüftungsmodule bekannt. Die DE 196 23 471 C1 beschreibt eine Belüftungsdüse, die in Form einer Lochdüse aufgebaut ist. Eine Vielzahl von in Reihe angeordneten Löchern, die sowohl in Abzugsrichtung als auch quer Abzugsrichtung versetzt sind, werden von einem Luftvolumenstrom durchsetzt. Dieser Luftvolumenstrom wird den Löchern über ein Mehrkammersystem (Zuführkammer, weitere Kammer, Verteilkammer) zugeführt.

Zudem ist aus EP 2 692 508 A1 eine Vorrichtung zum Strecken einer thermoplastischen Folie in Breitenrichtung bekannt, wobei eine darin vorgesehene Luftblasdüse, erwärmte Luft auf eine entlang einer Foliendurchlauffläche laufende Folie bläst.

Aus der US 3,199,224 ist eine Temperiervorrichtung für beschichtete Stoffe bekannt. Eine Vielzahl von Ausblasdüsen ist beidseitig einer Transportbahn, durch die die Stoffe geführt werden, angeordnet. Diese Ausblasöffnungen sind innerhalb von Rücksaugöffnungen angeordnet. Der Luftstrahl, welcher ausgegeben wird, trifft dabei auf die Materialbahn und prallt von dieser ab und wird dann über die Rücksaugöffnungen wieder angesaugt.

Nachteilig an der US 3,199,224 sind die unklaren Luftströmungsverhältnisse. Grundsätzlich kann die auszugebende Luftströmung als chaotisch fluktuierende Strömung beschrieben werden, was bedeutet, dass sich kein zeitlich stationärer Strömungszustand einstellt. In dem konkretem Fall bedeutet dies, dass die Freistrahlen chaotisch hin- und herpendeln. Sie treffen dabei nur kurzzeitig auf der Oberfläche der Materialbahn auf oder kippen kurzzeitig direkt in die benachbarten Rücksaugöffnungen. Diese chaotisch fluktuierenden Strömungen führen dann zu einer zeitlich und örtlich ungleichmäßigen Erwärmung bzw. Abkühlung der Materialbahn. Dadurch werden die mechanischen Eigenschaften der Materialbahn ungleichmäßig eingebracht.

Diese Problematik ist umso größer, wenn anstelle eines zu beschichtenden Stoffs, wie es die US 3,199,244 vorschlägt, eine Kunststofffolienbahn hergestellt werden soll. Bei dieser ist es wichtig, dass die mechanischen Eigenschaften (z.B. Planlage, Haze, Gurley, Porosity oder Schrumpf) gleichmäßig eingebracht werden. Hier ist das starke Pendeln und Kippen der Freistrahlen, die auch als Prallstrahlen bezeichnet werden können, sehr nachteilhaft, weil es dadurch zu einem stark unterschiedlichen Wärmeübergang an der Folie kommt. Beispielsweise ist es möglich, dass ein Teil der Kunststofffolienbahn durch die Vorschubbewegung immer über die Prallstrahlen läuft, wenn diese gerade weggekippt sind. Somit erfährt dieser Teil der Kunststofffolienbahn nur einen geringeren Wärmeeintrag. Andererseits könnte ein anderer Teil der Kunststofffolienbahn zufällig immer über die Prallstrahlen laufen, die günstig auf ihm auftreffen und einen großen Wärmeeintrag gewährleisten. In diesem Fall würden sich Bereiche mit hohem Wärmeübergang und solche mit niedrigem Wärmeübergang abwechseln. Die Kunststofffolienbahn wird somit unterschiedlich temperiert.

Abstrakt gesprochen sind die unstabilen Strömungsverhältnisse bisheriger Belüftungsmodule und Folienreckanlagen Ursache dafür, dass ein ungleichmäßiger Wärmeeintrag stattfindet. Durch die Bewegung in Abzugsrichtung der Kunststofffolienbahn wird diese örtlich und zeitlich unterschiedlich temperiert. Somit finden Wärmebehandlungsschritte bzw. verfahrenstechnische Vorgänge in der Kunststofffolienbahn zeitlich und örtlich zu unterschiedlichen Zeitpunkten statt. Dadurch beginnt oder endet beispielsweise die Kristallisation zu unterschiedlichen Zeitpunkten bzw. an unterschiedlichen Positionen, wodurch die Eigenschaften der Kunststofffolienbahn wie z.B. Transparenz oder ähnliches negativ beeinflusst werden.

Es ist daher die Aufgabe der hier vorliegenden Erfindung ein Belüftungsmodul für eine Folienreckanlage und eine entsprechende Folienreckanlage zu schaffen, durch die eine gleichzeitige Temperierung der Kunststofffolienbahn erreicht werden kann. Insbesondere sollen stabilere Strömungsverhältnisse geschaffen werden. Die Freistrahlen dürfen daher nicht mehr so stark pendeln und kippen, wodurch die Temperierung zeitlich und örtlich gleichmäßiger erfolgt.

Die Aufgabe wird durch das erfindungsgemäße Belüftungsmodul gemäß dem unabhängigen Anspruch 1 und durch die erfindungsgemäße Folienreckanlage gemäß dem Anspruch 14 gelöst. In den Ansprüchen 2 bis 13 finden sich erfindungsgemäße Weiterbildungen des Belüftungsmoduls und in Anspruch 15 findet sich eine erfindungsgemäße Weiterbildung der Folienreckanlage wieder.

Das erfindungsgemäße Belüftungsmodul dient zur Erwärmung oder zur Kühlung von Kunststofffolienbahnen, die verschiedenste Schichtdicken und Zusammensetzungen aufweisen können. Das Belüftungsmodul kann dabei in unterschiedlichen Zonen einer Folienreckanlage eingesetzt werden. Das Belüftungsmodul umfasst einen Folien-Einzugsbereich, an dem die Kunststofffolienbahn zugeführt wird, und einen Folien-Austrittsbereich, aus dem die Kunststofffolienbahn, entsprechend temperiert, wieder austritt. Die Kunststofffolienbahn wird dabei in Abzugsrichtung innerhalb des Belüftungsmoduls in einer Transportebene vom Folien-Einzugsbereich in Richtung des Folien-Austrittsbereichs bewegt. Zwischen dem Folien-Einzugsbereich und dem Folien-Austrittsbereich ist zumindest eine erste Ausblasdüsenanordnung vorgesehen, die dazu ausgebildet ist, Luft zum Erwärmen oder Kühlen in Richtung der Kunststofffolienbahn zu blasen. Die zumindest eine erste Ausblasdüsenanordnung umfasst zumindest eine Ausblasdüse, wobei sich die zumindest eine Ausblasdüse mit ihrer Längsrichtung quer oder senkrecht zur Abzugsrichtung der Kunststofffolienbahn erstreckt und parallel zur Transportebene ausgerichtet ist. Weiterhin ist zumindest ein erstes Rücksaugsystem mit zumindest zwei Absaugkanälen vorgesehen. Das Rücksaugsystem umfasst dabei zwei Ansaugbereiche und ist dazu ausgebildet, Luft über die Ansaugbereiche und die Absaugkanäle abzusaugen. Das Rücksaugsystem ist ebenfalls zwischen dem Folien-Einzugsbereich und dem Folien-Austrittsbereich angeordnet. Die zumindest beiden Ansaugbereiche sind in Abzugsrichtung voneinander beabstandet und parallel zur Transportebene ausgerichtet, wobei sich die zumindest beiden Ansaugbereiche mit ihrer Längsrichtung quer oder senkrecht zur Abzugsrichtung der Kunststofffolienbahn erstrecken. Die zumindest eine Ausblasdüse der zumindest einen ersten Ausblasdüsenanordnung ist (unmittelbar benachbart) zwischen dem ersten und dem zweiten Ansaugbereich angeordnet, wobei die zumindest eine Ausblasdüse der zumindest einen ersten Ausblasdüsenanordnung und die zumindest beiden Ansaugbereiche auf derselben Seite der Transportebene angeordnet sind. Der zumindest eine erste Ansaugbereich ist in Abzugsrichtung der Kunststofffolienbahn ausschließlich vor und der zumindest eine zweite Ansaugbereich ist in Abzugsrichtung der Kunststofffolienbahn ausschließlich nach der zumindest einen Ausblasdüse angeordnet. Die zumindest eine erste Ausblasdüsenanordnung umfasst mehrere Düsenkästen, wobei sich zwischen zwei Düsenkästen oder beabstandet von zwei Düsenkästen eine überwiegend oder vollständig luftundurchlässige Deckplattenanordnung befindet, die vorzugsweise parallel zur Transportebene verläuft, wodurch zwei benachbarte Ansaugbereiche verschiedener Ausblasdüsen in ihrer Erstreckung begrenzt sind.

Besonders vorteilhaft ist, dass die Ansaugbereiche in Abzugsrichtung ausschließlich vor bzw. hinter der Ausblasdüse angeordnet sind. Dadurch wird ein über die gesamte Breite der Kunststofffolienbahn verlaufender Prallstrahl erzeugt, der weniger stark hin und her pendelt und nicht mehr wegknickt. Es wird daher ein sehr konstanter Wärmeeintrag in die Kunststofffolienbahn erreicht. In Längsrichtung der Ausblasdüse ist diese im Gegensatz zur US 3,199,224 frei von einem Ansaugbereich. So sind die einzelnen Ausblasdüsen in der US 3,199,224 jeweils von allen Seiten von einem entsprechenden Ansaugbereich umgeben. Die Ansaugbereiche sind dabei vorzugsweise um weniger als 50cm, 40cm, 30cm, 20cm, 15cm, 10cm oder weniger als 5cm von der Ausblasdüse entfernt angeordnet. Der Grund für diese Stabilisierung kann darin gesehen werden, dass die Ausblasgeschwindigkeit (Impuls) so groß ist, dass der Freistrahl (Prallstrahl) nicht sofort in den Ansaugbereich gezogen werden kann und gezwungen ist, einen längeren Weg zu gehen (über Reflexion an der Kunststofffolienbahn). Eine andere Möglichkeit kann darin gesehen werden, dass die Rücksaugwirbel den Freistrahl (Prallstrahl) seitlich stützen und somit stabilisieren.

In einer erfindungsgemäßen Weiterbildung wurde durch eine umfangreiche Simulation überraschend herausgefunden, dass besonders gute Ergebnisse erzielt werden, wenn die gesamte, also gemeinsame Ansaugöffnungsfläche beider Ansaugbereiche im Überdeckungsbereich der Transportebene 8-mal bis 14-mal größer ist als die gesamte Düsenöffnungsfläche der Ausblasdüse, die von den Ansaugbereichen flankiert wird. Dies führt zu deutlich weniger stark pendelnden Prallstrahlen. Diese kippen deutlich weniger zur Seite als diejenigen aus dem Stand der Technik.

Besonders bevorzugt entspricht der Luftvolumenstrom, der in einer bestimmten Zeit aus der Ausblasdüse ausgeblasen wird, demjenigen Luftvolumenstrom, der in derselben Zeit durch die beiden Ansaugbereiche dem Rücksaugsystem zugeführt wird.

Eine Auswertung des mittleren Wärmeübertragungskoeffizienten von der Ausblasdüse auf die Kunststofffolienbahn hat ergeben, dass das neuartige erfindungsgemäße Belüftungsmodul einen wesentlich höheren mittleren Wärmeübertragungskoeffizienten aufweist als die bisher bekannten Belüftungsmodule. Zudem liegt der Wärmeübertragungskoeffizient des erfindungsgemäßen Belüftungsmoduls zeitlich gesehen wesentlich stabiler oder konstanter an der Kunststofffolienbahn an, sprich er schwankt nicht so stark. Auch die gemessenen Temperaturschwankungen der Kunststofffolienbahn sind nach dem Verlassen des Belüftungsmoduls wesentlich geringer.

In einer bevorzugten Ausführungsform ist die zumindest eine Ausblasdüse als Schlitzdüse ausgebildet, wobei die Düsenöffnungsfläche durch einen in Längsrichtung der Ausblasdüse verlaufenden und vollständig bzw. teilweise geöffneten Schlitz gebildet ist. Alternativ dazu kann die Ausblasdüse auch eine Lochdüse umfassen, wobei die Düsenöffnungsfläche durch eine Vielzahl von in Längsrichtung der Ausblasdüse in Reihe (in Abzugsrichtung und/oder quer zur Abzugsrichtung) angeordnet und voneinander getrennten Löchern in Form einer Gitteranordnung gebildet ist. Im Rahmen der Erfindung wird als Düsenöffnungsfläche derjenige Flächeninhalt der zumindest einen Ausblasdüse verstanden, durch den ein Luftmassenvolumenstrom hindurchtreten kann. Der Vorteil eines vollständig oder teilweise (beinhaltet z.B. die Anordnung von Verbindungsstreben in regelmäßigen Abständen) geöffneten Schlitzes ist, dass ein Wärmeübertragungskoeffizient erreicht werden kann, der zeitlich gesehen sehr stabil ist und die Temperaturschwankungen der Kunststofffolienbahn nach Verlassen des Belüftungsmoduls geringer sind. Dafür ist der Aufbau etwas komplexer, insbesondere wenn sich das Belüftungsmodul in Längsrichtung über eine sehr große Länge erstreckt und dabei die Abmessungen des Schlitzes (z.B. Schlitzbreite) konstant gehalten werden müssen. Daher kann der Schlitz auch in regelmäßigen Abständen durch entsprechende Verbindungsstreben, die nur wenige Millimeter bzw. wenige Zentimeter dick sind, zur Stabilisierung unterbrochen sein. In einem anderen Ausführungsbeispiel umfasst die Ausblasdüse eine Gitteranordnung, die eine Vielzahl von in Reihe angeordneten und voneinander beabstandeten Löchern aufweist. Eine solche Gitteranordnung kann sehr einfach hergestellt werden und bietet eine sehr hohe mechanische Stabilität. Wenn die Löcher sehr nahe beieinander liegen (Abstand z.B. weniger als 20mm, 15mm, 12mm, 10mm, 8mm, 6mm oder weniger als 5mm), dann wirken diese Löcher nicht als einzelne Löcher mit einer Vielzahl von einzelnen Freistrahlen, sondern es kann sich ein (gemeinsamer) Prallstrahl in Längsrichtung der Ausblasdüse einstellen. Es können auch mehr als eine Reihe von Löchern vorgesehen sein. Insbesondere können zwei bis acht Reihen vorgesehen sein, die in Abzugsrichtung voneinander beabstandet angeordnet sind. Bei einigen oder allen dieser Löcher kann es sich beispielsweise um Langlöcher handeln, wobei ihre größere Erstreckung entweder längs oder quer zur Abzugsrichtung verläuft. Grundsätzlich wäre es auch möglich, dass die zumindest eine Ausblasdüse einen Mix aus Schlitzdüse und Lochdüse umfasst. In diesem Fall würde es einen Wechsel beider Formen in Längsrichtung der Ausblasdüse geben. Der Bereich, in welchem die Ausblasdüse als Lochdüse ausgeführt ist (in Form einer Gitteranordnung) könnte zur mechanischen Stabilisierung der Ausblasdüse dienen. Die anderen Bereiche könnten dann als Schlitzdüse ausgeführt sein.

Bevorzugt sind der erste und der zweite Ansaugbereich ebenfalls durch eine Vielzahl von in Längsrichtung des jeweiligen Ansaugbereichs in Reihe angeordneten und voneinander getrennten Löchern in Form einer entsprechenden ersten bzw. zweiten Gitteranordnung gebildet. Dadurch wird eine hohe mechanische Stabilität des Ansaugbereichs gewährleistet. Es können auch hier mehr als eine Reihe von Löchern vorgesehen sein. Insbesondere können zwei bis acht Reihen vorgesehen sein, die in Abzugsrichtung voneinander beabstandet angeordnet sind. Bei einigen oder allen dieser Löcher kann es sich beispielsweise um Langlöcher handeln, wobei ihre größere Erstreckung entweder längs oder quer zur Abzugsrichtung verläuft.

Bevorzugt umfasst die zumindest eine erste Ausblasdüsenanordnung für jede Ausblasdüse einen eigenen Düsenkasten. Grundsätzlich könnten allerdings auch mehrere Ausblasdüsen in einem gemeinsamen Düsenkasten angeordnet sein. Der Düsenkasten umfasst entsprechende erste und zweite Seitenwände, die in Abzugsrichtung zueinander beabstandet angeordnet sind und die sich in Längsrichtung der zumindest einen Ausblasdüse erstrecken und quer oder senkrecht zur Transportebene angeordnet sind. Der zumindest eine Düsenkasten umfasst außerdem gegenüberliegend zur Ausblasdüse eine Rückwand, die sich in Längsrichtung der zumindest einen Ausblasdüse erstreckt und die Seitenwände miteinander verbindet. Die zumindest eine Ausblasdüse ist dabei zwischen den Seitenwänden angeordnet. Der Düsenkasten umgibt einen entsprechenden Luftaufnahme- bzw. Luftführungsraum, welcher vorzugsweise lediglich im Bereich der Ausblasdüse zur Transportebene hin geöffnet ist. Ein Aufbau des Düsenkastens kann wie in der DE 196 23 471 C1 erfolgen. Die Seitenwände können dabei parallel zueinander angeordnet sein, wodurch der Düsenkasten im Querschnitt eine Rechteckform oder eine quadratische Form umfasst. Sie können auch zumindest abschnittsweise in Richtung der Transportebene aufeinander zulaufen, wodurch der zumindest eine Düsenkasten einen zumindest teilweise konischen Querschnitt umfasst.

Am Außenbereich der Seitenwände ist dabei insbesondere der entsprechende erste bzw. zweite Absaugkanal gebildet, bzw. der erste und zweite Absaugkanal verlaufen entlang der jeweiligen Seitenwand.

Eine weitere Verbesserung des Belüftungsmoduls findet dann statt, wenn auch das Rücksaugsystem einen entsprechenden Rücksaugkasten umfasst, der sich in seiner Längsrichtung quer, insbesondere senkrecht zur Abzugsrichtung der Kunststofffolienbahn erstreckt und parallel zur Transportebene ausgerichtet ist. Dies kann z.B. dadurch erfolgen, dass der Rücksaugkasten weiter von der Transportebene beabstandet angeordnet ist als der zumindest eine Düsenkasten, wobei beide Kästen auf derselben Seite der Transportebene angeordnet sind.

Bevorzugst ist das zumindest eine erste Rücksaugsystem allerdings in dem zumindest einen Düsenkasten der zumindest einen ersten Ausblasdüsenanordnung integriert.

Der Rücksaugkasten umfasst ebenfalls einen sich in Längsrichtung des Rücksaugkastens erstreckenden Ansaugschlitz und/oder eine Vielzahl von in Längsrichtung des Rücksaugkastens in Reihe angeordneten und voneinander getrennten Ansaugöffnungen. Der Ansaugkasten ist in Längsrichtung vorzugsweise lediglich im Rahmen seines Ansaugschlitzes oder seiner Ansaugöffnungen geöffnet. Ansonsten ist er durch entsprechende Seiten- bzw. Rückwände verschlossen.

Im Zuge weiterer intensiver Untersuchungen und Simulationen wurde versucht, den Prallstrahl, der aus der zumindest einen Ausblasdüse der zumindest einen ersten Ausblasdüsenanordnung austritt, mittels einfacher Geometrien weiter zu stützen bzw. näher an die Kunststofffolienbahn zu bringen, ohne aufwendige Düsenaufsätze verwenden zu müssen. Wie bereits eingangs erläutert, sind hierfür nutzbare teleskopierbare Düsenaufsätze mechanisch aufwendig zu konstruieren und daher entsprechend teuer, weil die Konstruktion aufgrund der Breitenverstellung des Transportsystems ineinander schiebbar sein muss. In einer erfindungsgemäßen Weiterbildung wurde herausgefunden, dass es vorteilhaft ist, wenn an der zumindest einen Ausblasdüse einseitig eine Leitplattenanordnung angebracht ist, die weiter in Richtung der Transportebene vorsteht als die zumindest eine Ausblasdüse, wobei sich die Leitplattenanordnung wie die Ausblasdüse ebenfalls in Längsrichtung erstreckt. Bei dieser Leitplattenanordnung kann es sich um ein Leitblech oder um mehrere Leitbleche handeln, die sich in Längsrichtung erstrecken. Es können auch Kunststoffplatten verwendet werden. In diesem Fall wird der Prallstrahl nur einseitig gestützt, wobei sich der Prallstrahl an die seitliche Führung ansaugt (Coanda-Effekt) und so näher an den Film gebracht wird. Ein frühzeitiges Umkippen bzw. Pendeln des Prallstrahls wird dadurch ebenfalls verhindert. Eine gleichmäßigere Temperierung ist die Folge. Die Leitplattenanordnung bzw. das Leitblech kann auch als Coanda-Führungsblech bezeichnet werden.

Bevorzugt umfasst das Belüftungsmodul noch zumindest eine zweite Ausblasdüsenanordnung und zumindest ein zweites Rücksaugsystem. Diese sind in analoger Art und Weise wie die erste Ausblasdüsenanordnung und das erste Rücksaugsystem aufgebaut. Die zweite Ausblasdüsenanordnung kann daher eine oder mehrere Ausblasdüsen umfassen, die mit ihrer Längsrichtung quer oder senkrecht zur Abzugsrichtung der Kunststofffolienbahn ausgerichtet sind und sich parallel zur Transportebene erstrecken. Dabei ist allerdings die erste Ausblasdüsenanordnung und das zumindest eine erste Rücksaugsystem auf einer ersten Seite der Transportebene angeordnet, wohingegen die zumindest eine zweite Ausblasdüsenanordnung und das zumindest eine zweite Rücksaugsystem auf einer zweiten Seite der Transportebene angeordnet sind, die der ersten Seite gegenüberliegt. Dadurch wird die Kunststofffolienbahn von zwei Seiten temperiert.

Die erfindungsgemäße Folienreckanlage dient zur Herstellung von Kunststofffolienbahnen und ist mit zumindest einem Belüftungsmodul oder mehreren der beschriebenen Belüftungsmodule ausgestattet. Bei Einsatz mehrerer Belüftungsmodule können diese alle identisch aufgebaut sein. Es ist natürlich auch möglich, dass unterschiedliche Belüftungsmodule eingesetzt werden. So können einerseits Belüftungsmodule verwendet werden, bei denen die zumindest eine Ausblasdüse aus einer Lochdüse gebildet ist und andererseits solche, bei denen die zumindest eine Ausblasdüse aus einer Schlitzdüse gebildet ist. Selbiges gilt auch für die Ansaugbereiche. Auch innerhalb eines Belüftungsmoduls können bei Einsatz mehrerer Ausblasdüsen diese und die dazugehörigen Ansaugbereiche unterschiedlich ausgestaltet sein (Löcher oder Schlitz, bzw. Größe, Form, Ausrichtung (Winkellage) usw.). Für den Fall, dass sich zumindest zwei Belüftungsmodule in der Anzahl der Ausblasdüsen ihrer zumindest einen ersten Ausblasdüsenanordnung unterscheiden, ist vorzugsweise die gesamte Düsenöffnungsfläche aller Ausblasdüsen der zumindest einen ersten Ausblasdüsenanordnung des einen Belüftungsmoduls in etwa so groß wie die gesamte Düsenöffnungsfläche aller Ausblasdüsen der zumindest einen ersten Ausblasdüsenanordnung des anderen Belüftungsmoduls. Dadurch wird stets ein gleichmäßiger Wärmeeintrag gewährleistet.

Bevorzugt umfasst das Belüftungsmodul noch zumindest eine weitere Ausblasdüse, die von weiteren ersten und zweiten Ansaugbereichen flankiert ist. Der Aufbau und die Anordnung sind dabei wie bei der zumindest einen Ausblasdüse. In diesem Fall umfasst die zumindest eine erste Ausblasdüsenanordnung weitere Düsenkästen, wobei jede weitere Ausblasdüse in einem weiteren Düsenkasten angeordnet ist. Zumindest zwischen zwei Düsenkästen oder beabstandet von zwei Düsenkästen befindet sich eine überwiegend oder vollständig luftundurchlässige Deckplattenanordnung, die parallel zur Transportebene verläuft, wodurch zwei benachbarte Ansaugbereiche verschiedener Ausblasdüsen in ihrer Erstreckung begrenzt sind. Dies bedeutet, dass Luft lediglich in den Ansaugbereichen abgesaugt werden kann, wodurch die Strömungsverhältnisse sehr genau und reproduzierbar einstellbar sind.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnungen zeigen im Einzelnen:
- Figur 1:: eine Ansicht einer Folienreckanlage;
- Figuren 2A, 2B:: einen Querschnitt durch unterschiedliche Ausführungsbeispiele des erfindungsgemäßen Belüftungsmoduls;
- Figur 3:: eine Darstellung, die einen Überdeckungsbereich der Ansaugbereiche und der Ausblasdüse des erfindungsgemäßen Belüftungsmoduls über einer Transportebene für eine Kunststofffolienbahn illustriert;
- Figuren 4A, 4B:: verschiedene Darstellungen eines Düsenkastens einer ersten Ausblasdüsenanordnung des erfindungsgemäßen Belüftungsmoduls;
- Figur 5:: einen Querschnitt durch ein Ausführungsbeispiel des erfindungsgemäßen Belüftungsmoduls mit beidseitig der Transportebene angeordneten Ausblasdüsenanordnungen und Rücksaugsystemen;
- Figur 6:: eine Draufsicht auf die Ausblasdüsenanordnung, die mehrere Ausblasdüsen umfasst, die durch eine Deckplattenanordnung voneinander getrennt sind, wobei jede Ausblasdüse von zwei Ansaugbereichen flankiert ist;
- Figuren 7, 8A, 8B:: einen Querschnitt durch unterschiedliche Ausführungsbeispiele des erfindungsgemäßen Belüftungsmoduls;
- Figur 9:: einen Querschnitt durch unterschiedliche Ausführungsbeispiele des erfindungsgemäßen Belüftungsmoduls, wobei sich die Ausführungsbeispiele in der Anzahl der Ausblasdüsen und der Rücksaugdüsen unterscheiden;
- Figur 10:: eine räumliche Darstellung eines Ausführungsbeispiels des erfindungsgemäßen Belüftungsmoduls, wobei die Ausblasdüsen Lochdüsen umfassen;
- Figur 11:: eine räumliche Darstellung eines Ausführungsbeispiels des erfindungsgemäßen Belüftungsmoduls, wobei die Ausblasdüsen der ersten Ausblasdüsenanordnung als Zwillingsdüsen ausgebildet sind; und
- Figuren 12A, 12B:: verschiedene Diagramme, die beispielhafte Verläufe der Temperatur und des mittleren Wärmeübergangskoeffizienten von einem erfindungsgemäßen Belüftungsmodul und einem Belüftungsmodul aus dem Stand der Technik gegenüberstellen.

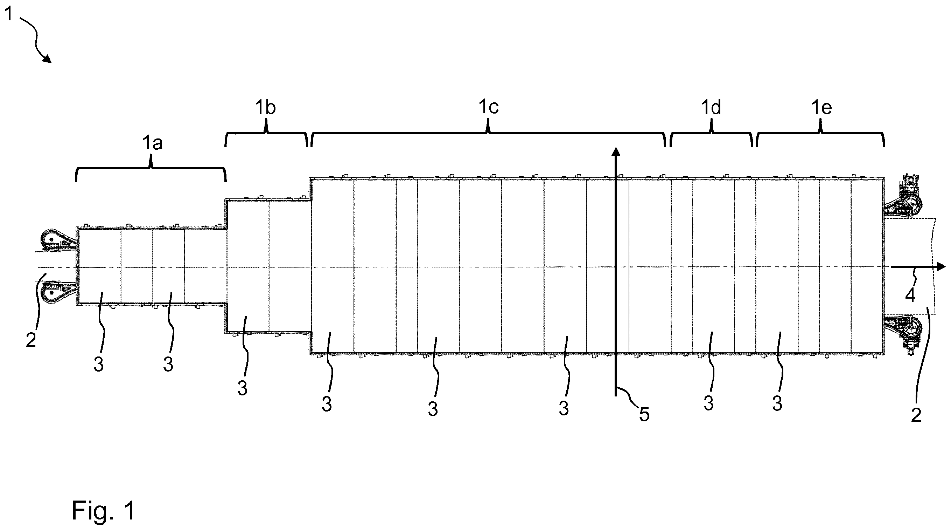

Figur 1 zeigt eine Draufsicht auf eine erfindungsgemäße Folienreckanlage 1. Diese Folienreckanlage 1 kann als Längsreckanlage oder Querreckanlage oder sequentielle Reckanlage mit einer Längsreck-Stufe und einer Querreck-Stufe oder als Simultanreckanlage ausgebildet sein. Die Folienreckanlage 1 dient strecken einer Kunststofffolienbahn 2 und ist hierfür beispielsweise in verschiedene Zonen 1a, 1b, 1c, 1d und 1e aufgeteilt. Selbstverständlich müssen nicht alle diese Zonen 1a bis 1e tatsächlich vorhanden sein. In den verschiedenen Zonen 1a bis 1e ist die Kunststofffolienbahn 2 unterschiedlichen Temperaturen ausgesetzt, um gewisse Folieneigenschaften zu generieren oder einzustellen. Die erste Zone 1a wird dabei auch als Vorheizzone bezeichnet. Die zweite Zone 1b wird als Reckzone bezeichnet, wohingegen die dritte Zone 1c als Weiterheizzone bezeichnet wird. Die vierte Zone 1d wird auch als Neutralzone bezeichnet und die fünfte Zone 1e als Kühlzone. Grundsätzlich können sich zwischen den einzelnen Zonen 1a bis 1e noch weitere Neutralzonen befinden, um eine Trennung der Zonen 1a bis 1e sicherzustellen, so dass sich die einzelnen Zonen 1a bis 1e weniger stark beeinflussen (die Luft strömt von einer Zone 1a bis 1e in die andere).

Eine Zone 1a bis 1e umfasst dabei ein erfindungsgemäßes Belüftungsmodule 3 oder mehrere der erfindungsgemäßen Belüftungsmodule 3. Diese Belüftungsmodule 3 erstrecken sich in Abzugsrichtung 4 der Kunststofffolienbahn 2 mit einer Länge von ungefähr mehr als 1 m, 1,5 m, 2 m, 2,5 m, 3 m, 3,5 m, 4 m, 4,5 m oder mehr als 5 m, aber vorzugsweise um weniger als 6 m, 5 m, 4 m, 3 m, 2 m, 1 m. Sie umfassen außerdem eine Erstreckung in Längsrichtung 5, also quer oder senkrecht zur Abzugsrichtung 4 der Kunststofffolienbahn 2, mit einer Länge von mehr als 2 m, 3 m, 4 m, 5 m, 6 m, 7 m, 8 m, 9 m, 10 m, 11 m, 12 m, 13 m oder mehr als 15 m, aber vorzugsweise von weniger als 17 m, 16 m, 15 m, 14 m, 13 m, 12 m, 11 m, 10 m, 9 m, 8 m, 7 m, 6 m, 5 m, 4 m, 3 m oder weniger als 2 m.

Ein Belüftungsmodul 3 kann dabei eine Ventilatoreinrichtung (nicht dargestellt) und eine entsprechende Heiz- und/oder Kühlvorrichtung (nicht dargestellt) umfassen. So können die Belüftungsmodule 3, je nachdem in welcher Zone 1a bis 1e sie sich befinden, die Kunststofffolienbahn 2 erwärmen oder kühlen. Für den Fall, dass die Kunststofffolienbahn 2 erwärmt werden soll, wird die Luft, die in Richtung der Kunststofffolienbahn 2 geblasen wird, durch die zumindest eine Heiz- und/oder Kühlvorrichtung erwärmt. In der Kühlzone 1e wird beispielsweise die Kunststofffolienbahn 2 abgekühlt. Hierfür wird meist die Umgebungsluft von außerhalb des Belüftungsmoduls 3 angesaugt und auf die Kunststofffolienbahn 2 geblasen. Es wäre allerdings auch möglich, dass noch eine zusätzliche Kühlung der von außen angesaugten Luft vorgenommen wird. Der grundsätzliche, insbesondere innere Aufbau eines Belüftungsmoduls 3 mit vorzugsweise mehreren Umlenkkammern, um eine möglichst homogene Luftströmung zu erreichen, ist beispielsweise in der DE 196 23 471 C1 beschrieben, deren Offenbarungsgehalt zum Inhalt dieser Anmeldung gemacht wird. Dargestellt ist ebenfalls, dass die Kunststofffolienbahn 2 in die erste Zone 1a eingeführt und nach der fünften Zone 1e aus dieser entnommen wird.

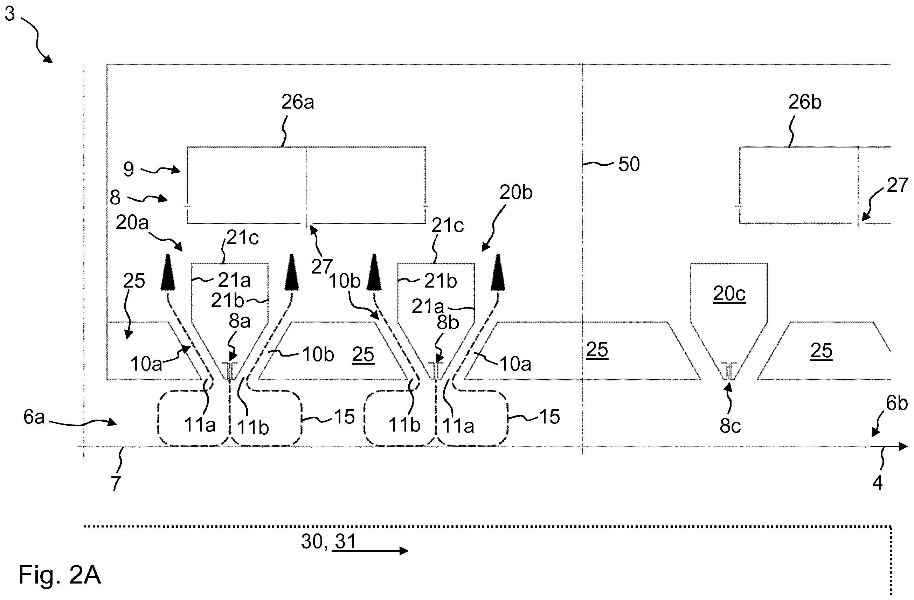

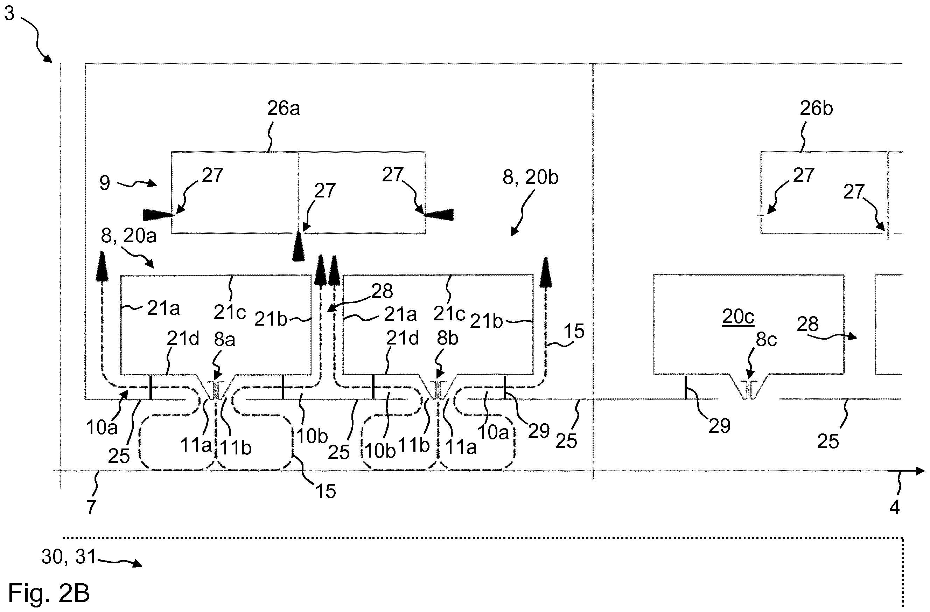

Die Figuren 2A und 2B zeigen einen Querschnitt durch unterschiedliche Ausführungsbeispiele des erfindungsgemäßen Belüftungsmoduls 3. Die Umrandung des Belüftungsmoduls 3 ist nur beispielhaft gewählt. Das Belüftungsmodul 3 könnte auch eine andere Form haben. Das Belüftungsmodul 3 umfasst einen Folien-Einzugsbereich 6a und einen Folien-Austrittsbereich 6b. Die Kunststofffolienbahn 2 wird in Abzugsrichtung 4 innerhalb des Belüftungsmoduls 3 in einer Transportebene 7 vom Folien-Einzugsbereich 6a in Richtung des Folien-Austrittsbereichs 6b bewegt. Zwischen dem Folien-Einzugsbereich 6a und dem Folien-Austrittsbereich 6b ist zumindest eine erste Ausblasdüsenanordnung 8 angeordnet, die dazu ausgebildet ist, Luft zum Erwärmen oder Kühlen in Richtung der Kunststofffolienbahn 2 zu blasen. Die zumindest eine erste Ausblasdüsenanordnung 8 umfasst zumindest eine erste Ausblasdüse 8a. Die zumindest eine erste Ausblasdüse 8a erstreckt sich mit ihrer Längsrichtung quer oder senkrecht zur Abzugsrichtung 4 der Kunststofffolienbahn 2 und ist parallel zur Transportebene 7 ausgerichtet. Die Längsrichtung der zumindest einen Ausblasdüse 8a verläuft parallel zur Längsrichtung 5 des Belüftungsmoduls 3. In dem Ausführungsbeispiel der Figuren 2A und 2B umfasst die zumindest eine erste Ausblasdüsenanordnung 8 noch zumindest eine zusätzliche Ausblasdüse 8b. Diese ist in Abzugsrichtung 4 versetzt zur zumindest einen Ausblasdüse 8a angeordnet.

Es ist außerdem zumindest ein erstes Rücksaugsystem 9 mit zumindest zwei Absaugkanälen 10a, 10b vorgesehen, die jeweils einen Ansaugbereich 11a, 11b aufweisen. Das zumindest eine erste Rücksaugsystem 9 ist dazu ausgebildet, Luft über die Absaugkanäle 10a, 10b abzusaugen, wobei das zumindest eine erste Rücksaugsystem 9 ebenfalls zwischen dem Folien-Einzugsbereich 6a und dem Folien-Austrittsbereich 6b angeordnet ist.

Die zumindest beiden Ansaugbereiche 11a, 11b sind in Abzugsrichtung 4 voneinander beabstandet und parallel zur Transportebene 7 ausgerichtet. Die zumindest beiden Ansaugbereiche 11a, 11b erstrecken sich mit ihrer Längsrichtung quer oder senkrecht zur Abzugsrichtung 4 der Kunststofffolienbahn 2. Die Längsrichtung der beiden Ansaugbereiche 11a, 11b verläuft vorzugsweise parallel zur Längsrichtung 5 des Belüftungsmoduls 3.

Die zumindest eine Ausblasdüse 8a der zumindest einen ersten Ausblasdüsenanordnung 8 ist zwischen dem ersten und dem zweiten Ansaugbereich 11a, 11b angeordnet. Die zumindest eine Ausblasdüse 8a der zumindest einen ersten Ausblasdüsenanordnung 8 und die zumindest beiden Ansaugbereiche 11a, 11b sind auf derselben Seite der Transportebene 7 angeordnet.

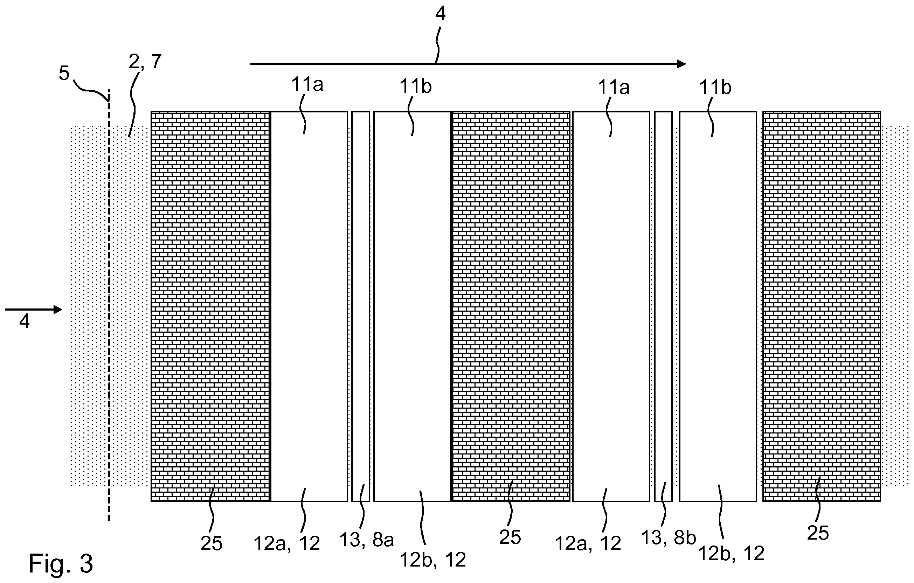

Die beiden Ansaugbereiche 11a, 11b weisen im Überdeckungsbereich der Transportebene 7 eine gesamte Ansaugöffnungsfläche 12 (s. Figur 3) auf, die 8-mal bis 14-mal größer ist als die Düsenöffnungsfläche 13 am Ausblasbereich der zumindest einen Ausblasdüse 8a im Überdeckungsbereich zur Transportebene 7. Die gesamte Ansaugöffnungsfläche 12 ist dabei die Summe der Ansaugöffnungsfläche 12a des ersten Ansaugbereichs 11a und der Ansaugöffnungsfläche 12b des zweiten Ansaugbereichs 11b.

Weiterhin ist noch zumindest eine zusätzliche Ausblasdüse 8b gezeigt, die sich mit ihrer Längsrichtung 5 ebenfalls quer oder senkrecht zur Abzugsrichtung 4 der Kunststofffolienbahn 2 erstreckt und parallel zur Transportebene 7 ausgerichtet ist, wobei die weitere Ausblasdüse 8b am Ausblasbereich jeweils eine eigene Düsenöffnungsfläche 13 aufweist. Beide Ausblasdüsen 8a, 8b der zumindest einen ersten Ausblasdüsenanordnung 8 sind in Abzugsrichtung 4 voneinander beabstandet angeordnet. Die Düsenöffnungsfläche 13 der weiteren Ausblasdüse 8b ist zwischen je einem ersten und je einem zweiten weiteren Ansaugbereich 11a, 11b angeordnet. Der jeweils weitere erste und zweite Ansaugbereich 11a, 11b sind ebenfalls über einen ersten bzw. zweiten Absaugkanal 10a, 10b mit dem zumindest einen ersten Rücksaugsystem 9 verbunden. Der jeweils weitere erste Ansaugbereich 11a ist in Abzugsrichtung 4 der Kunststofffolienbahn 2 aus-schließlich vor und der jeweils weitere zweite Ansaugbereich 11b ist in Abzugsrichtung 4 der Kunststofffolienbahn 2 ausschließlich nach der weiteren Ausblasdüse 8b angeordnet.

In Figur 3 ist dargestellt, dass sich die beiden Ansaugbereiche 11a, 11b weiter in Längsrichtung 5 erstrecken als die Transportebene 7. In Draufsicht stehen die Ansaugbereiche 11a, 11b teilweise über ein bzw. beide Enden der Transportebene 7 über. Die Transportebene 7 gibt dabei den Bereich an, über den sich die Kunststofffolienbahn 2 bewegen bzw. erstrecken kann. Für die dargelegte Größenbetrachtung sind allerdings lediglich diejenigen Teile der gesamten Ansaugöffnungsfläche 12 relevant, die im Überdeckungsbereich zur Transportebene 7 liegen. Selbiges gilt auch für die Düsenöffnungsfläche 13.

Unter der Ansaugöffnungsfläche 12 ist lediglich die (offene) Fläche zu verstehen, durch die ein Luftmassenvolumenstrom fließen kann. Selbiges gilt auch für die Düsenöffnungsfläche 13.

Die zumindest eine Ausblasdüse 8a erstreckt sich in Längsrichtung 5 vorzugsweise gleich weit wie die beiden Ansaugbereiche 11a, 11b.

Um einen möglichst konstanten Luftmassenvolumenstrom (bzgl. Menge und Form) zu erreichen, der in einem bestimmten Zeitintervall durch die erste und durch die optional zweite Ausblasdüse 8a, 8b in einem bestimmten Zeitintervall ausgegeben wird, ist es wichtig, dass der zumindest eine erste Ansaugbereich 11a in Abzugsrichtung 4 der Kunststofffolienbahn 2 ausschließlich vor und der zumindest eine zweite Ansaugbereich 11b in Abzugsrichtung 4 der Kunststofffolienbahn 2 ausschließlich nach der zumindest einen Ausblasdüse 8a angeordnet ist.

Wie eingangs erläutert, entspricht der Luftmassenvolumenstrom, der durch die zumindest eine Ausblasdüse 8a in einem bestimmten Zeitintervall ausgegeben wird, im Wesentlichen demjenigen Luftmassenvolumenstrom, der durch die beiden Ansaugbereiche 11a, 11b im selben Zeitintervall eingesaugt wird. Um den Prallstrahl 15 (s. Figur 2A, 2B) bestmöglich zu stützen, sollte die gesamte Ansaugöffnungsfläche 12 (Summe der beiden (Teil-)Ansaugöffnungsflächen 12a, 12b) im Überdeckungsbereich der Transportebene 7 8-mal oder mehr als 8-mal, 9-mal, 10-mal, 11-mal, 12-mal oder mehr als 13-mal so groß sein als die gesamte Düsenöffnungsfläche 13 der zumindest einen Ausblasdüse 8a im Überdeckungsbereich der Transportebene 7. Gleichzeitig kann die gesamte Ansaugöffnungsfläche 12 beider Ansaugbereiche 11a, 11b 14-mal so groß oder weniger als 14-mal, 13-mal, 12-mal, 11-mal, 10-mal oder weniger als 9-mal so groß sein als die gesamte Düsenöffnungsfläche 13 der zumindest einen Ausblasdüse 8a im Überdeckungsbereich der Transportebene 7.

Im Hinblick auf Figur 3 ist dargestellt, dass die Ansaugöffnungsfläche 12a des ersten Ansaugbereichs 11a in etwa so groß ist wie die Ansaugöffnungsfläche 12b des zweiten Ansaugbereichs 11b. Es könnte natürlich auch sein, dass sich die Ansaugöffnungsflächen 12a, 12b beider Ansaugbereiche 11a, 11b voneinander unterscheiden. Dabei unterscheiden sie sich vorzugsweise um weniger als 30%, 25%, 20%, 15%, 10% oder um weniger als 5% voneinander.

Die zumindest eine erste Ausblasdüsenanordnung 8 umfasst zumindest einen Düsenkasten 20a, in welchem die zumindest eine Ausblasdüse 8a angeordnet ist. Der Düsenkasten 20a umfasst eine erste und eine zweite Seitenwand 21a, 21b, die in Abzugsrichtung 4 zueinander beabstandet angeordnet sind und sich in Längsrichtung 5 der zumindest einen Ausblasdüse 8a erstrecken und quer oder senkrecht zur Transportebene 7 angeordnet sind. Der zumindest eine Düsenkasten 20a umfasst außerdem eine gegenüberliegend zur Ausblasdüse 8a angeordnete Rückwand 21c, die sich in Längsrichtung 5 der zumindest einen Ausblasdüse 8a erstreckt und die Seitenwände 21a, 21b miteinander verbindet. Die zumindest eine Ausblasdüse 8a ist dabei zwischen beiden Seitenwänden 21a, 21b angeordnet. In dem dargestellten Ausführungsbeispiel der Figuren 2A und 2B gibt es noch zumindest einen zusätzlichen Düsenkasten 20b, in dem die zumindest eine zusätzliche Ausblasdüse 8b angeordnet ist. Der Aufbau ist derselbe wie bei dem bereits beschriebenen zumindest einen Düsenkasten 20a. In jedem Düsenkasten 20a, 20b ist vorzugsweise genau eine Ausblasdüse 8a, 8b angeordnet.

Ein Teil des ersten Absaugkanals 10a erstreckt sich dabei entlang einer Außenseite der ersten Seitenwand 21a des zumindest einen Düsenkastens 20a. Ein Teil des zweiten Absaugkanals 10b erstreckt sich entlang einer Außenseite der zweiten Seitenwand 21b des zumindest einen Düsenkastens 20a. Ein Absaugkanal 10a, 10b wird nicht dadurch definiert, dass er auch durch zusätzliche Wandabschnitte, die sich quer bzw. senkrecht zu einem Bodenabschnitt erstrecken, geführt sein muss. Ein Absaugkanal 10a, 10b kann auch dadurch gebildet sein, dass der Luftstrom aufgrund des zumindest einen ersten Rücksaugsystems 9 lediglich entlang einer Seitenwand 21a, 21b des zumindest einen Düsenkastens 20a geführt wird.

In Figur 2A ist dargestellt, dass die beiden in Abzugsrichtung 4 versetzt zueinander angeordneten Seitenwände 21a, 21b zumindest abschnittsweise in Richtung der Transportebene 7 aufeinander zu laufen, wodurch der zumindest eine Düsenkasten 20a einen zumindest teilweise konischen Querschnitt umfasst. An den konisch aufeinander zu laufenden Endbereichen der Seitenwände 21a, 21b ist dabei die zumindest eine Ausblasdüse 8a gebildet bzw. angeordnet.

In Figur 2B ist dagegen dargestellt, dass die Seitenwände 21a, 21b in etwa parallel zueinander verlaufen und an ihrer, der Transportebene 7 zugewandten Seite von einer Vorderwand 21d verschlossen werden, wobei die zumindest eine Ausblasdüse 8a aus der benachbart zur Transportebene 7 angeordneten Vorderwand 21d heraussteht und die Vorderwand 21d in zwei Teile gliedert. Dabei erstreckt sich der zumindest eine erste Absaugkanal 10a entlang des ersten Teils der Vorderwand 21d und der zweite Absaugkanal 10b entlang des zweiten Teils der Vorderwand 21d.

Bezugnehmend auf die Figuren 2A und 3 ist noch eine luftundurchlässige Deckplattenanordnung 25 dargestellt, die zwischen zwei Düsenkästen 20a, 20b angeordnet ist und die parallel zur Transportebene 7 verläuft. Die jeweiligen Ansaugbereiche 11a, 11b werden bevorzugt durch einen Abstand zwischen der Ausblasdüse 8a und der Deckplattenanordnung 25 definiert. In Figur 2B ist dargestellt, dass die Deckplattenanordnung 25 beabstandet von den Düsenkästen 20a, 20b angeordnet ist. Auch hier gilt, dass zwei benachbarte Ansaugbereiche 11a, 11b verschiedener Ausblasdüsen 8a, 8b in ihrer Erstreckung durch die Deckplattenanordnung 25 begrenzt sind.

In Figur 2B, in welcher die Düsenkästen 20a, 20b noch eine Vorderwand 21d umfassen, die parallel zur Transportebene 7 ausgerichtet ist, ist die Deckplattenanordnung 25 im einfachsten Fall als einfache zweidimensionale Platte ausgebildet. Diese erstreckt sich parallel zur Transportebene 7 und ist bevorzugt durch Abstandshalter 29 von der Vorderwand 21d beabstandet gehalten. Vorzugsweise wird die Deckplattenanordnung 25 mit den Abstandshaltern 29 verschraubt. Insbesondere sind die zumindest zwei Düsenkästen 20a, 20b unter Bildung eines Abstandsraums 28 benachbart zueinander angeordnet. Die Absaugkanäle 10a, 10b verlaufen von je einem an jedem Düsenkasten 20a, 20b angeordneten Ansaugbereich 11a, 11b durch den Abstandsraum 28, wobei die Deckplattenanordnung 25 mittels der Abstandshalter 29 an zwei Düsenkästen 20a, 20b befestigt ist und in Richtung der Transportebene 7 vorsteht.

Die Deckplattenanordnung 25 umfasst zumindest eine Deckplatte, die bevorzugt flach ausgebildet ist und aus einem (flachen) Element bzw. (Abdeck-)Blech besteht. Die Deckplattenanordnung 25 kann verschiedene Formen (z.B. rechteckig, quadratisch, usw.) umfassen.

Die Deckplattenanordnung 25 kann auch ohne Einsatz entsprechender Abstandshalter 29 auf den Düsenkästen befestigt sein.

In Figur 2A dagegen ist die Deckplattenanordnung 25 an die konisch aufeinander zu laufenden Seitenwände 21a, 21b angepasst. Die Deckplattenanordnung 25 umfasst hier zumindest eine Seitenwand (in diesem Ausführungsbeispiel sind es zwei Seitenwände), die parallel zu der Transportebene 7 angeordnet ist. Eine andere abgeschrägte Seitenwand der Deckplattenanordnung 25, die die zwei parallel angeordneten Seitenwände verbindet, verläuft dabei in etwa parallel zu zumindest einer Seitenwand 21a, 21b des zumindest einen Düsenkastens 20a, die konisch auf die andere Seitenwand 21b, 21a des zumindest einen Düsenkastens 20a zu läuft. Zwischen dieser Seitenwand der Deckplattenanordnung 25 und derjenigen Seitenwand 21a, 21b des zumindest einen Düsenkastens 20a ist der jeweilige Absaugkanal 10a, 10b gebildet.

Die Deckplattenanordnung 25 kann dabei im Querschnitt auch trapezförmig ausgestaltet sein. Grundsätzlich wäre es auch möglich, dass zumindest zwei Düsenkästen 20a, 20b unter Bildung eines Abstandsraums 28 benachbart zueinander angeordnet sind, wobei der entsprechende Absaugkanal 10a, 10b von je einem an jedem Düsenkasten 20a, 20b angeordneten Ansaugbereich 11a, 11b durch den gebildeten Abstandsraum 28 verlaufen.

Vorzugsweise sind alle Ausblasdüsen 8a, 8b der zumindest einen ersten Ausblasdüsenanordnung 8 gleich weit von der Transportebene 7 beabstandet. Es wäre auch möglich, dass eine Ausblasdüse 8a der zumindest einen ersten Ausblasdüsenanordnung 8 näher an der Transportebene 7 angeordnet ist als eine andere Ausblasdüse 8b der zumindest einen ersten Ausblasdüsenanordnung 8.

Vorzugsweise gilt für die Ausführungsbeispiele der Figuren 2A und 2B, dass die Deckplattenanordnung 25 in etwa gleich weit von der Transportebene 7 beabstandet ist wie die zumindest eine benachbarte Ausblasdüse 8a, 8b, 8c, 8d, 8e, 8f.

In den Figuren 2A und 2B ist ein beispielhafter Verlauf des Prallstrahls 15 eingezeichnet. Dieser trifft auf die Kunststofffolienbahn 2 auf und wird dann walzenförmig in Abzugsrichtung 4 und entgegen der Abzugsrichtung 4 umgelenkt, um dann über die jeweiligen Ansaugbereiche 11a, 11b abgesaugt zu werden.

In den Figuren 2A und 2B ist ebenfalls das zumindest eine erste Rücksaugsystem 9 dargestellt, welches zumindest einen Rücksaugkasten 26a umfasst, der sich mit seiner Längsrichtung quer, insbesondere senkrecht zur Abzugsrichtung 4 der Kunststofffolienbahn 2 erstreckt und parallel zur Transportebene 7 ausgerichtet ist. Seine Längsrichtung verläuft dabei insbesondere parallel zur Längsrichtung 5 des Belüftungsmoduls 3. Der zumindest eine Rücksaugkasten 26a ist dabei weiter von der Transportebene 7 beabstandet als der zumindest eine Düsenkasten 20a. Allerdings sind der zumindest eine Rücksaugkasten 26a und der zumindest eine Düsenkasten 8a auf derselben Seite der Transportebene 7 angeordnet. Der zumindest eine Rücksaugkasten 26a umfasst einen sich in Längsrichtung des zumindest einen Rücksaugkastens 26a erstreckenden durchgängigen Ansaugschlitz 27 oder eine Vielzahl von in Längsrichtung des Rücksaugkastens 26a in Reihe angeordneten und voneinander getrennten Ansaugöffnungen. Dieser durchgängige Längsschlitz 27 bzw. die Ansaugöffnungen zeigen dabei in Richtung der Transportebene 7 und damit in Richtung des zumindest einen Düsenkastens 20a. Der zumindest eine Rücksaugkasten 26a saugt Luft vorzugsweise lediglich oder überwiegend über den Ansaugschlitz 27 bzw. die entsprechenden Ansaugöffnungen ein.

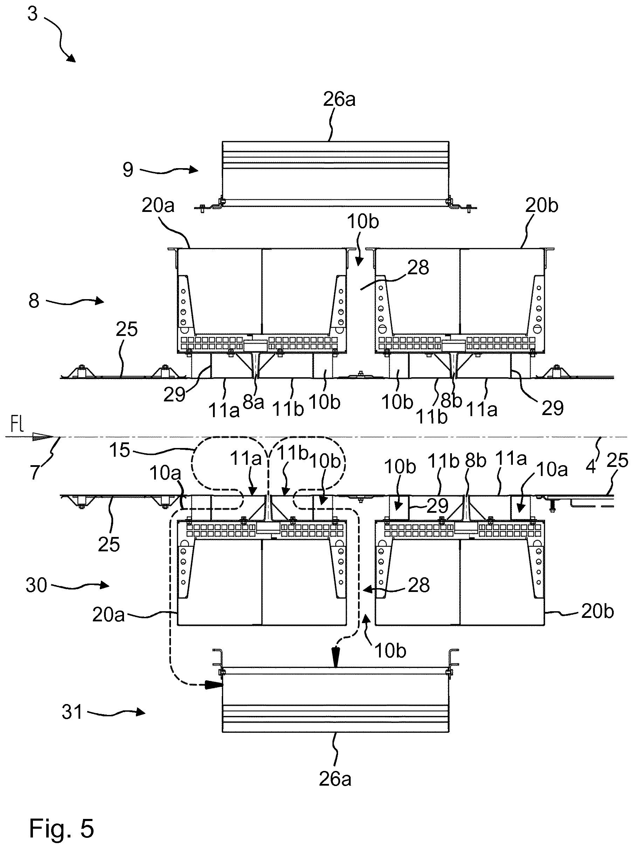

In den Figuren 2A und 2B ist gepunktet dargestellt, dass es neben der ersten Ausblasdüsenanordnung 8 und dem ersten Rücksaugsystem 9 noch eine zweite Ausblasdüsenanordnung 30 und ein zweites Rücksaugsystem 31 geben kann. In diesem Zusammenhang wird auf Figur 5 verwiesen. Dort ist dargestellt, dass die zumindest eine zweite Ausblasdüsenanordnung 30 und das zumindest eine zweite Rücksaugsystem 31 auf der entgegengesetzten Seite der Transportebene 7 angeordnet ist, verglichen zu der zumindest einen ersten Ausblasdüsenanordnung 8 und dem zumindest einen ersten Rücksaugsystem 9.

Die zumindest eine zweite Ausblasdüsenanordnung 30 umfasst eine oder mehrere Ausblasdüsen 8a, 8b mit je einer Düsenöffnungsfläche 13. Die zumindest eine Ausblasdüse 8a oder die mehreren Ausblasdüsen 8a, 8b verlaufen mit ihrer Längsrichtung wiederum quer oder senkrecht zur Abzugsrichtung 4 der Kunststofffolienbahn 2 und erstrecken sich parallel zur Transportebene 7. Das zumindest eine zweite Rücksaugsystem 31 umfasst ebenfalls mehrere Ansaugbereiche 11a, 11b, die sich mit ihrer Längsrichtung quer oder senkrecht zur Abzugsrichtung 4 der Kunststofffolienbahn 2 erstrecken. Die Düsenöffnungsfläche 13 der zumindest einen Ausblasdüse 8a oder der mehreren Ausblasdüsen 8a, 8b der zumindest einen zweiten Ausblasdüsenanordnung 30 sind zwischen je einem ersten und einem zweiten Ansaugbereich 11a, 11b des zumindest einen zweiten Rücksaugsystems 31 angeordnet. Die zumindest eine zweite Ausblasdüsenanordnung 30 und das zumindest eine zweite Rücksaugsystem 31 entsprechen von seinem Aufbau her der ersten Ausblasdüsenanordnung 8 bzw. dem ersten Rücksaugsystem 9, worauf hiermit verwiesen wird.

Vorzugsweise ist die zumindest eine Ausblasdüse 8a der ersten Ausblasdüsenanordnung 8 in Draufsicht deckungsgleich zu der zumindest einen Ausblasdüse 8a der zweiten Ausblasdüsenanordnung 30 angeordnet. Selbiges gilt vorzugsweise auch für die entsprechenden Ansaugbereiche 11a, 11b.

In Figur 5 ist ebenfalls der Verlauf der Luftströmung dargestellt. Der Prallstrahl 15 tritt aus der zumindest einen ersten Ausblasdüse 8a aus und trifft auf die Kunststofffolienbahn 2. Dort wird er walzenförmig umgeleitet und über die Ansaugbereiche 11a, 11b, die unmittelbar benachbart zu der zumindest einen Ausblasdüse 8a angeordnet sind, abgesaugt. Der entsprechende erste bzw. zweite Absaugkanal 10a, 10b sind durch einen Teil der Vorderwand 21d des Düsenkastens 20a und durch die entsprechende Seitenwand 21a, 21b des Düsenkastens 20a gebildet.

Figur 5 zeigt, dass die zwei Düsenkästen 20a, 20b unter Bildung eines Abstandsraums 28 benachbart zueinander angeordnet sind. Dieser Abstandsraum 28 wird durch die Seitenwände 21b der zwei benachbarten Düsenkästen 20a, 20b gebildet. Durch diesen Abstandsraum 28 strömt ein Luftmassenvolumenstrom, der durch die jeweils zwei zweiten Absaugkanäle 10b der Ansaugbereiche 11a, 11b abgesaugt wird. Vorzugsweise ist daher keine separate Führungseinrichtung für den Luftmassenvolumenstrom notwendig.

In Figur 5 ist außerdem dargestellt, dass die Deckplattenanordnung 25 in Richtung der Transportebene 7 von dem entsprechenden Düsenkasten 20a bzw. 20b hervorsteht. In diesem Fall ist die Deckplattenanordnung 25 näher an der Transportebene 7 angeordnet als die jeweiligen Vorderwände 21d der Düsenkästen 20a, 20b. Die Deckplattenanordnung 25 ist mittels Abstandshalter 29 an beiden Düsenkästen 20a, 20b befestigt, insbesondere verschraubt. In Draufsicht auf die Deckplattenanordnung 25 ist diese in Überlappung zu der Vorderwand 21d angeordnet. Der jeweilige Absaugkanal 10a, 10b verläuft daher durch einen Abstandsraum 28 zwischen der Vorderwand 21d und der Deckplattenanordnung 25. Die Deckplattenanordnung 25 ist vorzugsweise gleich weit von der Transportebene 7 beabstandet wie die benachbarten Ausblasdüsen 8a, 8b.

Für den Fall, dass das Belüftungsmodul 3 nur eine Ausblasdüse 8a umfasst, sind die beiden benachbarten Ansaugbereiche 11a, 11b dennoch durch eine entsprechende Deckplattenanordnung 25 begrenzt. Der Wortlaut "Deckplattenanordnung" umfasst den Einsatz einer oder mehrerer Platten, die insbesondere eben ausgeführt sind und beispielsweise rechteckig oder quadratisch gestaltet sein können.

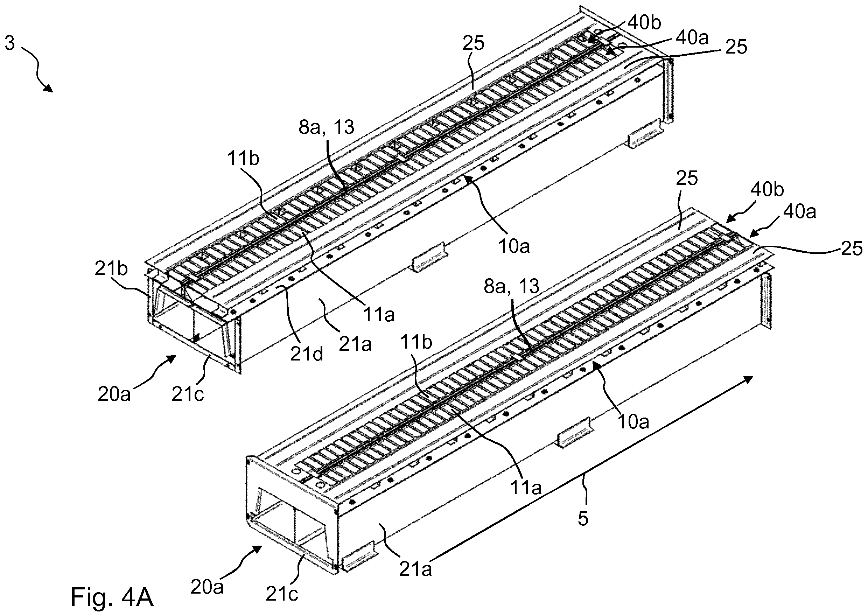

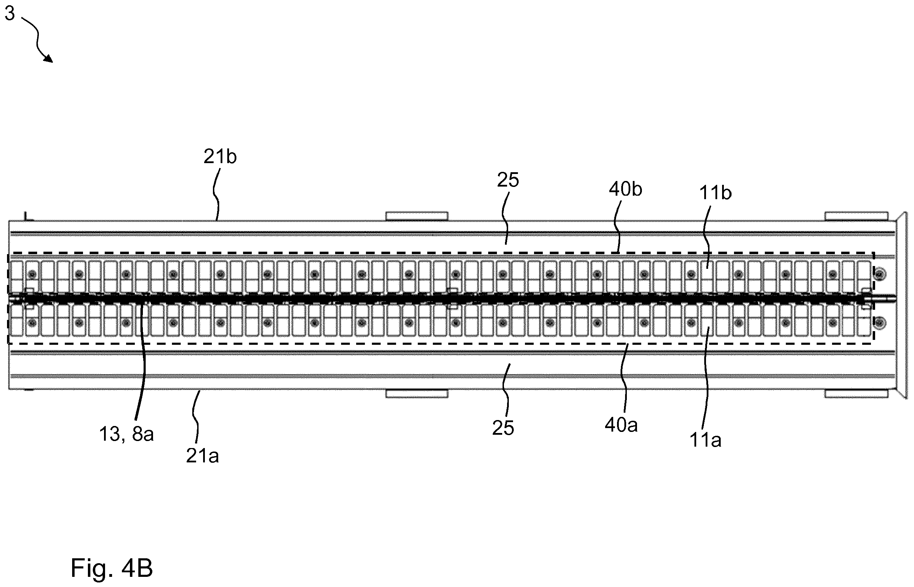

Die Figuren 4A und 4B zeigen verschiedene Darstellungen eines solchen Düsenkastens 20a, 20b, wie er beispielsweise in der ersten Ausblasdüsenanordnung 8 eingesetzt wird. Die Stirnseite eines solchen Düsenkastens 20a, 20b ist dabei zumindest teilweise geöffnet, weil über diese Luft eingeblasen wird. Wie bereits erläutert, sieht das erfindungsgemäße Belüftungsmodul 3 bzw. die erfindungsgemäße Folienreckanlage 1 den Einsatz einer Heiz- und/oder Kühlvorrichtung vor, die dazu ausgebildet ist, eine bestimmte Luftmenge in einer bestimmten Zeit auf eine bestimmte Temperatur zu erwärmen oder zu kühlen. Die zumindest eine Heiz- und/oder Kühlvorrichtung umfasst dabei einen Luftausgang, der mit der zumindest einen ersten Ausblasdüsenanordnung 8 verbunden ist. Dieser Luftausgang ist dabei insbesondere mit der offenen Stirnseite des entsprechenden Düsenkastens 20a, 20b der ersten Ausblasdüsenanordnung 8 verbunden. Die zumindest eine Heiz- und/oder Kühlvorrichtung umfasst außerdem einen Lufteingang. Dieser kann entweder mit dem zumindest einen ersten Rücksaugsystem 9 verbunden sein, wodurch das Belüftungsmodul 3 als Umluftmodul arbeiten kann. Vorzugsweise ist der Lufteingang ebenfalls mit einer zumindest teilweise geöffneten Stirnseite des zumindest einen Rücksaugkastens 26a des zumindest einen ersten Rücksaugsystems 9 verbunden. Andererseits kann der Lufteingang auch mit einem Bereich außerhalb des Belüftungsmoduls 3 verbunden sein, wodurch Frischluft ansaugbar ist. Diese Frischluft kann zusätzlich erwärmt oder abgekühlt werden. Unter "Kühlen" ist dabei auch zu verstehen, dass die Frischluft lediglich angesaugt und über die zumindest eine Ausblasdüse 8a in Richtung der Kunststofffolienbahn 2 geblasen wird.

In den Figuren 4A und 4B ist außerdem dargestellt, dass der erste Ansaugbereich 11a durch eine Vielzahl von in Längsrichtung 5 des ersten Ansaugbereichs 11a in Reihe angeordneten und voneinander getrennten Löchern in Form einer ersten Gitteranordnung 40a gebildet ist. Selbiges gilt auch für den zweiten Ansaugbereich 11b. Dieser ist ebenfalls durch eine Vielzahl von in Längsrichtung 5 des zweiten Ansaugbereichs 11b in Reihe angeordneten und voneinander getrennten Löchern in einer zweiten Gitteranordnung 40b gebildet.

Zumindest ein Loch oder alle Löcher des ersten und/oder zweiten Ansaugbereichs 11a, 11b umfasst bzw. umfassen vorzugsweise eine größere Erstreckung in Abzugsrichtung 4 als in Längsrichtung 5 des ersten und/oder zweiten Ansaugbereichs 11a, 11b.

Zumindest ein Loch oder alle Löcher des ersten und/oder zweiten Ansaugbereichs 11a, 11b umfassen im Querschnitt, also in Draufsicht (s. Figur 4B) eine eckige, runde, ovale oder n-polygonale Form oder sind einer solchen Form angenähert.

Zu erkennen ist außerdem, dass die Deckplattenanordnung 25 und die erste Gitteranordnung 40a miteinander verbunden, vorzugsweise verschraubt sind. Eine einteilige Ausbildung könnte ebenfalls möglich sein. So können die einzelnen Löcher durch Ausstanzen oder Lasern der Deckplattenanordnung 25 hergestellt werden. Selbiges gilt auch für die Deckplattenanordnung 25, die sich in Richtung der anderen Seitenwand 21b des Düsenkastens 20a erstreckt. Diese Deckplattenanordnung 25 ist ebenfalls vorzugsweise fest mit der zweiten Gitteranordnung 40b verbunden, vorzugsweise verschraubt oder einteilig an dieser ausgebildet. Die jeweilige Gitteranordnung 40a, 40b ist daher insbesondere in einer Ebene mit der entsprechenden Deckplattenanordnung 25 angeordnet. Diese Ebene ist vorzugsweise parallel zur Transportebene 7. Grundsätzlich könnte die jeweilige Gitteranordnung 40a, 40b auch mit dem entsprechenden Düsenkasten 20a, 20b verschraubt sein.

Die entsprechende erste bzw. zweite Gitteranordnung 40a, 40b erstreckt sich vorzugsweise derart weit in Längsrichtung 5 wie sich auch die Kunststofffolienbahn 2 erstreckt.

Der zumindest eine Düsenkasten 20a besteht, wie vorzugsweise auch die entsprechenden Gitteranordnungen 40a, 40b und die Deckplattenanordnung 25 aus einem Metall.

Figur 4B zeigt, dass die zumindest eine Ausblasdüse 8a der zumindest einen ersten Ausblasdüsenanordnung 8 eine Schlitzdüse umfasst, wobei die Düsenöffnungsfläche 13 durch einen in Längsrichtung 5 der Ausblasdüse 8a verlaufenden Schlitz gebildet ist. Dieser Schlitz ist in dem Ausführungsbeispiel vollständig geöffnet. Er könnte auch teilweise geöffnet sein, wobei Unterbrechungen z.B. durch Verbindungsstreben (zur mechanischen Stabilisierung) vorgesehen sein könnten.

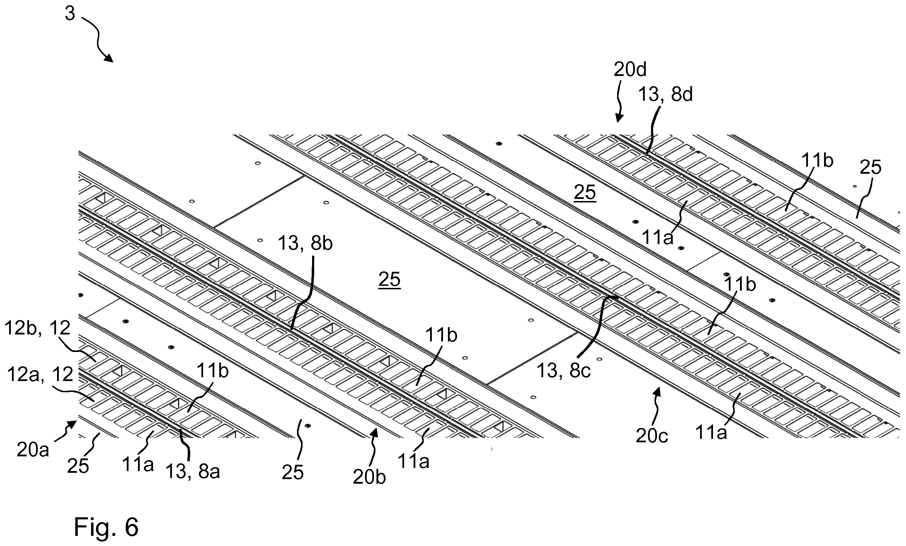

In Figur 6 ist eine Draufsicht auf die erste Ausblasdüsenanordnung 8 gezeigt. In dem Ausführungsbeispiel sind vier Düsenkästen 20a, 20b, 20c, 20d in Abzugsrichtung 4 beabstandet voneinander angeordnet. In jedem Düsenkasten 20a bis 20d befindet sich eine Ausblasdüse 8a, 8b, 8c, 8d. Jede dieser Ausblasdüsen 8a bis 8d wird von einem ersten und einem zweiten Ansaugbereich 11a, 11b flankiert. Die einzelnen Ansaugbereiche 11a, 11b der verschiedener Düsenkästen 20a bis 20d sind durch eine Deckplattenanordnung 25 voneinander beabstandet.

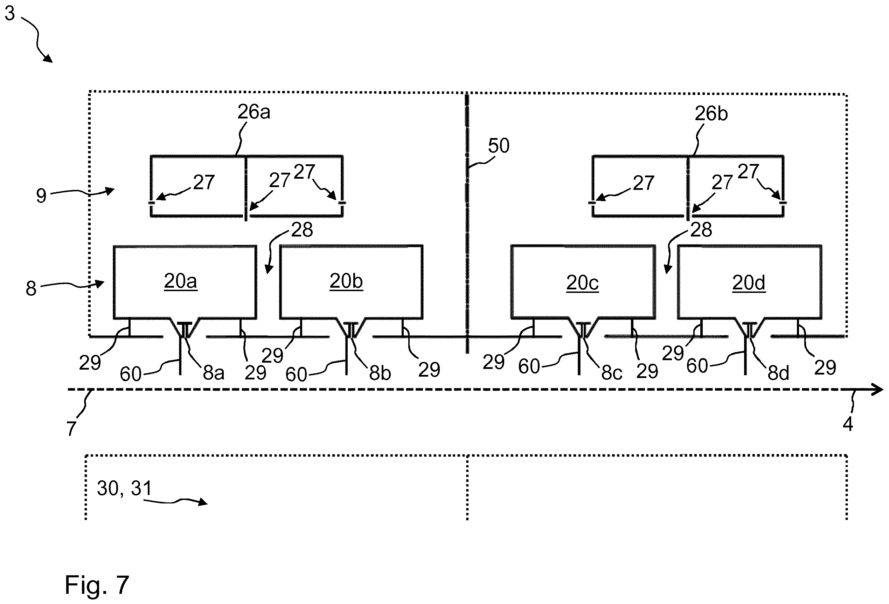

In Figur 7 ist ein Querschnitt durch ein weiteres Ausführungsbeispiel des erfindungsgemäßen Belüftungsmoduls 3 dargestellt. Dieses umfasst vier Düsenkästen 20a bis 20d. Je zwei Düsenkästen 20a, 20b bzw. 20c, 20d sind einem Rücksaugkasten 26a, 26b zugeordnet. Dies bedeutet, dass ein Rücksaugkasten 26a bzw. 26b die Luft von jeweils zwei Ausblasdüsen 8a, 8b bzw. 8c, 8d einsaugt. Beabstandet von jeweils zwei Düsenkästen 20a, 20b bzw. 20b, 20c bzw. 20c, 20d ist jeweils eine Deckplattenanordnung 25 angeordnet. Auch an den äußeren Wänden des Belüftungsmoduls 3 ist jeweils eine Deckplattenanordnung 25 angeordnet, die sich in Richtung der äußersten Düsenkästen 20a und 20d erstreckt und so die entsprechenden Absaugbereiche 11a, 11b definiert.

Weiterhin kann noch eine zusätzliche Trennwand 50 vorgesehen sein, die sicherstellt, dass keine Luftzirkulation zwischen dem zumindest einen Rücksaugkasten 26a mit den zugeordneten beiden Düsenkästen 20a, 20b und dem zumindest einen weiteren Rücksaugkasten 26b mit den beiden zugeordneten Düsenkästen 20c und 20d stattfindet.

Um den Prallstrahl 15 (nicht dargestellt in Figur 7) weiterhin zu stabilisieren, ist vorzugsweise an der zumindest einen Ausblasdüse 8a oder an allen Ausblasdüsen 8a, 8b, 8c, 8d der zumindest einen ersten Ausblasdüsenanordnung 8 eine Leitplattenanordnung 60 angeordnet, die weiter in Richtung der Transportebene 7 vorsteht als die zumindest eine Ausblasdüse 8a bzw. als alle Ausblasdüsen 8a, 8b, 8c, 8d. Die Leitplattenordnung 60 erstreckt sich dabei vorzugsweise geschlossen in Längsrichtung 5 der zumindest einen Ausblasdüse 8a bzw. der jeweiligen Ausblasdüse 8a, 8b, 8c, 8d.

Eine solche Leitplattenanordnung 60 kann selbstverständlich auch an den Ausblasdüsen 8a bis 8d der zweiten Ausblasdüsenanordnung 30 angeordnet sein.

Durch eine derartige Leitplattenanordnung 60 ist es möglich, die Prallstrahlen 15 näher an die Kunststofffolienbahn 2 zu bringen, um einen gleichmäßigeren Wärmeübergangskoeffizienten erzielen zu können. Dabei sind keine aufwändigen, insbesondere teleskopierbaren Düsenaufsätze notwendig, die die Herstellungskosten erhöhen würden. Durch die Leitplattenanordnung 60 ist der Prallstrahl 15 (lediglich) einseitig stützbar. Simulationen haben das überraschende Ergebnis geliefert, dass sich der Prallstrahl 15 an die seitliche Führung ansaugt (Coanda-Effekt) und dadurch näher an die Kunststofffolienbahn 2 gebracht werden kann. Am Ende der Leitplattenanordnung 60 löst sich der seitlich geführte Prallstrahl 15 und trifft auf die Kunststofffolienbahn 2 auf. Ein Umkippen bzw. Pendeln des Prallstrahls 15 wird somit vermindert. Eine gleichmäßigere Temperierung der Kunststofffolienbahn 2 ist die Folge.

Grundsätzlich kann die Leitplattenanordnung 60 günstiger gestaltet werden als herkömmliche Düsenaufsätze. Die Leitplattenanordnung 60 könnte beispielsweise in oder entgegen der Abzugsrichtung 4 wegklappen wie ein gelenkig gelagertes Blech. Alternativ könnte die Leitplattenanordnung 60 auch als massiver Aufsatz ausgeführt sein, der allerdings nur einseitig angeordnet und nicht wie ein Düsenaufsatz als Kasten mit Schlitz gebildet ist.

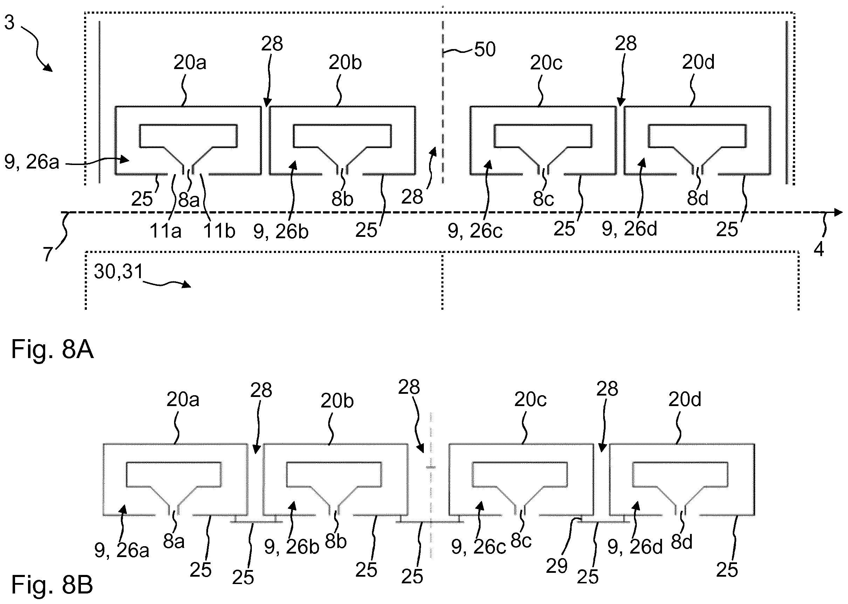

Figur 8A zeigt einen Querschnitt durch ein anderes Ausführungsbeispiel des erfindungsgemäßen Belüftungsmoduls 3. Dieses Ausführungsbeispiel zeigt, dass das zumindest eine erste Rücksaugsystem 9 in dem zumindest einen Düsenkasten 20a, 20b, 20c, 20d der zumindest einen ersten Ausblasdüsenanordnung 8 integriert ist. Der entsprechende zumindest eine Düsenkasten 20a umfasst daher nochmals einen separaten Rücksaugaufnahmebereich, der vorzugsweise vollständig mit Ausnahme der Ansaugbereiche 11a, 11b in Längsrichtung 5 des entsprechenden Düsenkastens 8a geschlossen ist, wobei die durch das erste Rücksaugsystem 9 angesaugte Luft über die Stirnseite des entsprechenden Düsenkastens 20a absaugbar ist. Es kann davon gesprochen werden, dass die Rücksaugkasten 26a, 26b, 26c, 26d in den Düsenkästen 20a bis 20d integriert sind. Dadurch kann ein besonders kompakter Aufbau des erfindungsgemäßen Belüftungsmoduls 3 realisiert werden.

Figur 8B zeigt eine weitere Ausführungsform des erfindungsgemäßen Belüftungsmoduls 3 aus Figur 8A. Zu besseren Übersicht sind lediglich die Düsenkästen 20a, 20b, 20c und 20d dargestellt. Im Unterschied zu Figur 8A ist der Abstandsraum 28 zwischen zwei Düsenkästen 20a, 20b bzw. 20b, 20c bzw. 20c, 20d durch eine Deckplattenanordnung 25 zumindest in Richtung der Transportebene 7 verschlossen. Eine Luftströmung kann sich daher nicht von der Transportebene 7 in den Abstandsraum 28 bilden. Die Deckplattenanordnung 25 ist vorzugsweise mit jeweils zwei Düsenkästen 20a, 20b bzw. 20b, 20c bzw. 20c, 20d verschraubt. Sie erstreckt sich zumindest über die Breite des Abstandsraums 28 (in Abzugsrichtung 4) und über die Breite der Kunststofffolienbahn 2. Sie kann flach ausgeführt sein oder wie in Figur 8B dargestellt in Richtung der Transportebene vorstehen. Sie kann eine Platte oder mehrere Platten umfassen. Dadurch ist sichergestellt, dass die Luft weit überwiegend (mehr als 80% der Luft) oder ausschließlich an den jeweiligen Ansaugbereichen 11a, 11b abgesaugt wird. Die Deckplattenanordnung 25 kann mit einem Abstandshalter 29 angebracht werden oder direkt auf die jeweiligen Düsenkästen 20a, 20b bzw. 20b, 20c bzw. 20c, 20d aufgesetzt bzw. mit diesen verschraubt oder fest verbunden sein.

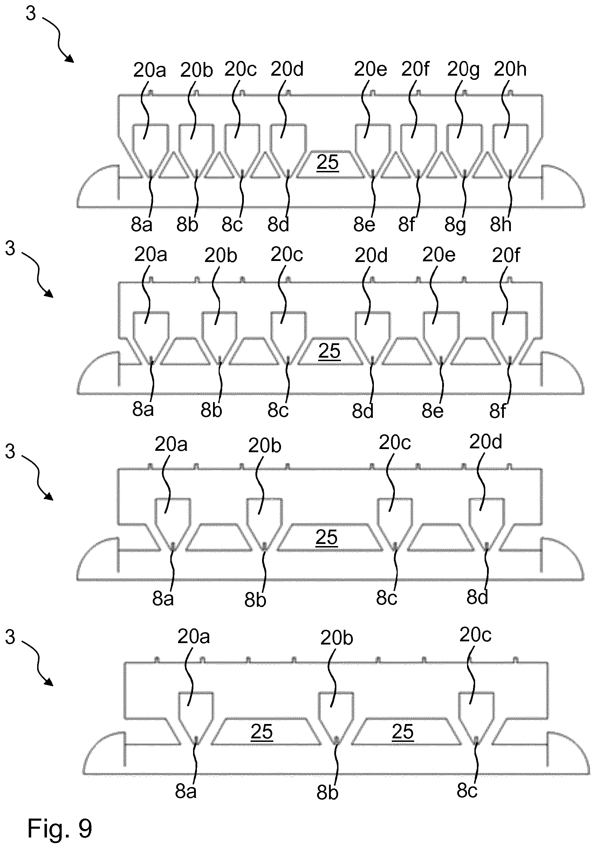

Figur 9 zeigt Querschnitt durch eine Vielzahl von erfindungsgemäßen Belüftungsmodulen 3, die übereinander dargestellt sind. Die einzelnen Belüftungsmodule 3 haben dabei unterschiedlich viele Ausblasdüsen 8a, 8b, 8c, 8d, 8e, 8f, 8g, 8h. In dem ersten Ausführungsbeispiel gibt es acht Ausblasdüsen 8a bis 8h. In dem zweiten Ausführungsbeispiel gibt es sechs Ausblasdüsen 8a bis 8f. In dem dritten Ausführungsbeispiel gibt es vier Ausblasdüsen 8a bis 8d. In dem vierten Ausführungsbeispiel gibt es drei Ausblasdüsen 8a bis 8c. Erfindungsgemäß ist allerdings, dass die gesamte Düsenöffnungsfläche 13 aller Ausblasdüsen 8a bis 8h der ersten Ausblasdüsenanordnung 8 konstant ist. Dies bedeutet, dass bei vielen Ausblasdüsen 8a bis 8h die jeweilige Düsenöffnungsfläche 13 der entsprechenden Ausblasdüse 8a bis 8h kleiner ist als wenn es nur wenige Ausblasdüsen 8a bis 8c gibt. Insgesamt ist dadurch der Wärmeeintrag in die Kunststofffolienbahn 2 konstant. Selbiges gilt auch für die gesamte Ansaugöffnungsfläche 12. Diese setzt sich aus der Ansaugöffnungsfläche 12a des jeweils ersten Ansaugbereichs 11a und der Ansaugöffnungsfläche 12b des jeweils zweiten Ansaugbereichs 11b zusammen.

Insgesamt ist die Größe der gesamten Ansaugöffnungsfläche 12 der ersten Ausblasdüsenanordnung 8 konstant. Dies bedeutet, dass für den Fall, dass es eine Vielzahl von Ansaugbereichen 11a, 11b gibt (wie beim ersten Beispiel in Figur 9), die jeweiligen Ansaugöffnungsflächen 12a, 12b des jeweiligen ersten bzw. zweiten Ansaugbereichs 11a, 11b kleiner sind als für den Fall, dass es nur wenige Ansaugbereiche 11a, 11b gibt, wie dies im letzten Beispiel der Figur 9 dargestellt ist.

Eine solche Gestaltung ist vorteilhaft, falls die erfindungsgemäße Folienreckanlage 1 zumindest zwei Belüftungsmodule 3 beinhaltet, die sich in der Anzahl ihrer Ausblasdüsen 8a, 8b, ... usw. unterscheiden. In diesem Fall ist die gesamte Düsenöffnungsfläche 13 aller Ausblasdüsen 8a, 8b, ... usw. der zumindest einen ersten Ausblasdüsenanordnung 8 des einen Belüftungsmoduls 3 in etwa so groß wie die gesamte Düsenöffnungsfläche 13 aller Ausblasdüsen 8a, 8b, ... usw. der zumindest einen ersten Ausblasdüsenanordnung 8 des anderen Belüftungsmoduls 3. Selbiges gilt ebenfalls für die gesamte Ansaugöffnungsfläche 12 aller Ansaugbereiche 11a, 11b der ersten Ausblasdüsenanordnung 8 des einen Belüftungsmoduls 3 verglichen mit der gesamten Ansaugöffnungsfläche 12 aller Ansaugbereiche 11a, 11b der ersten Ausblasdüsenanordnung 8 des anderen Belüftungsmoduls 3.

Selbstverständlich gilt dies auch für die in Figur 9 nicht dargestellte zweite Ausblasdüsenanordnung 30 und das zweite Rücksaugsystems 31.

Untersuchungen haben ergeben, dass bei Einsatz von drei oder vier Düsenkästen 20a bis 20d eine gleichmäßigere Luftströmung innerhalb des Belüftungsmoduls 3 erzielt werden kann als wenn fünf, sechs, sieben, acht oder mehr als acht Düsenkästen 20a bis 20h eingesetzt werden.

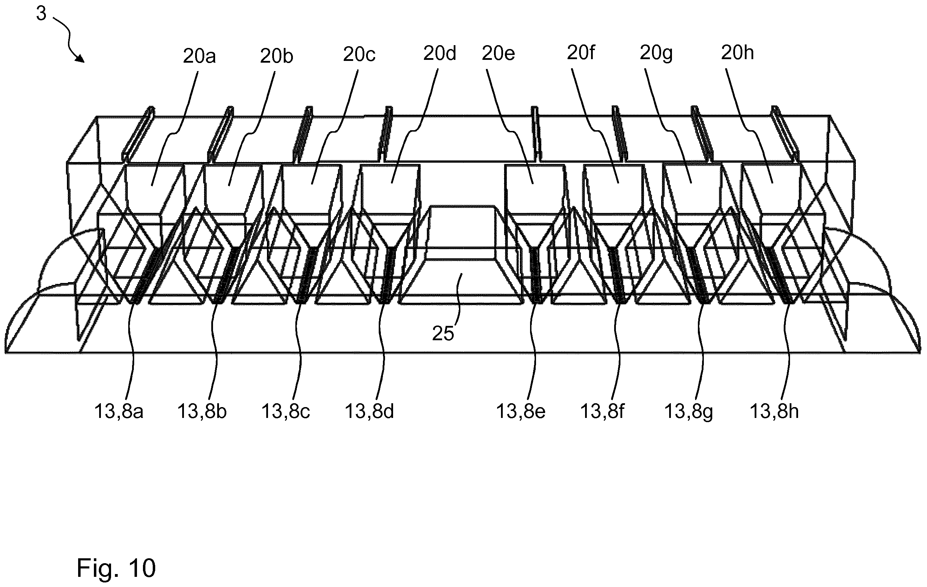

Figur 10 zeigt ein weiteres Ausführungsbeispiel des erfindungsgemäßen Belüftungsmoduls 3 in einer räumlichen Darstellung. Das Belüftungsmodul 3 umfasst hier wiederum acht Ausblasdüsen 8a bis 8h, wobei diese Ausblasdüsen 8a bis 8h in diesem Ausführungsbeispiel keine durchgängige Schlitzdüse umfassen. Vielmehr ist zumindest eine Ausblasdüse 8a, in diesem Fall alle Ausblasdüsen 8a bis 8h der zumindest einen ersten Ausblasdüsenanordnung 8, durch eine Lochdüse gebildet bzw. sie umfasst eine solche Lochdüse. Die gesamte Düsenöffnungsfläche 13 einer Ausblasdüse 8a bis 8h wird dabei durch eine Vielzahl von in Längsrichtung 7 der jeweiligen Ausblasdüse 8a bis 8h in Reihe angeordneten und voneinander getrennten Löchern in Form einer Gitteranordnung gebildet.

Das zumindest eine Loch oder alle Löcher der Düsenöffnungsfläche 13 umfassen im Querschnitt eine eckige, runde, ovale oder n-polygonale Form oder sind einer solchen angenähert.

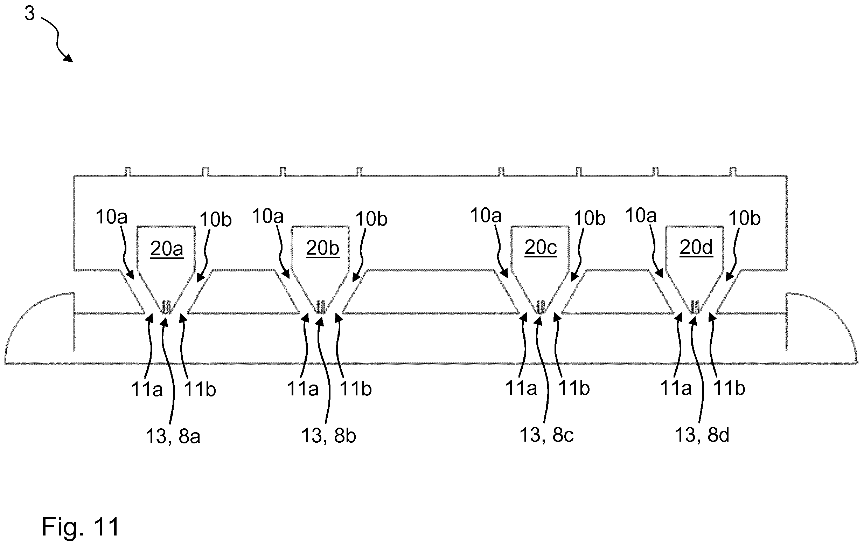

Figur 11 zeigt einen Querschnitt durch ein weiteres Ausführungsbeispiel des erfindungsgemäßen Belüftungsmoduls 3. In diesem Ausführungsbeispiel gibt es vier Ausblasdüsen 8a bis 8d, die in Abzugsrichtung 4 beabstandet voneinander angeordnet sind. Zumindest eine Ausblasdüse 8a, in diesem Fall alle Ausblasdüsen 8a bis 8d, der zumindest einen ersten Ausblasdüsenanordnung 8 umfassen eine Zwillingsdüse mit zwei in Abzugsrichtung 4 voneinander getrennten und beabstandeten Austrittskammern. Dadurch ist die Düsenöffnungsfläche 13 aus zwei voneinander in Abzugsrichtung 4 getrennten Teildüsenöffnungsflächen zusammengesetzt. Auch in diesem Fall ist die zumindest eine Ausblasdüse 8a von je zwei Ansaugbereichen 11a, 11b flankiert.

Grundsätzlich gilt, dass bei Einsatz von weniger Ausblasdüsen 8a, 8b, ... usw., die Temperaturgleichmäßigkeit zunimmt. Im Gegensatz dazu nimmt allerdings die lokale Belastung auf die Kunststofffolienbahn 2 ebenfalls zu, da der Wärmeeintrag über sehr kurze Abschnitte (hoher Wärmeübertragungskoeffizient) eingebracht wird. Außerdem trifft die Luft mit einer hohen Luftgeschwindigkeit auf die Kunststofffolienbahn 2 auf. Für thermisch und mechanisch sensible Folientypen (beispielsweise PA, PET) wäre dies kritisch, weil eine solche Kunststofffolienbahn 2 beispielsweise durch den starken Prallstrahl 15 verformt (gereckt) oder durch den starken Temperatureintrag beschädigt wird. Somit wird die Anzahl der Ausblasdüsen 8a, 8b, ... usw. nach dem Material der Kunststofffolienbahn 2 ausgewählt. Selbiges gilt auch für die Größe der Düsenöffnungsfläche 13 und der gesamten Ansaugöffnungsfläche 12 der Ansaugbereiche 11a, 11b, die die Düsenöffnungsfläche 13 flankieren.

Vorzugsweise sind die einzelnen Düsenkästen 20a, 20b, ... usw. in eine nicht dargestellte Haltevorrichtung in Längsrichtung 7 einschiebbar. Dadurch kann ein Tausch der jeweiligen Düsenkästen 20a, 20b, ... usw. durch Düsenkästen 20a, 20b, ... usw. mit einer geänderten Ausblasdüse 8a, 8b, ... usw. leicht durchgeführt werden. Selbiges gilt vorzugsweise auch für die Rücksaugkästen 26a, 26b, ... usw.

Alle Ausführungen, die für die Ausblasdüsenanordnung 8 und das erste Rücksaugsystem 9 gemacht worden sind, gelten auch für die zumindest eine zweite Ausblasdüsenanordnung 30 und das zumindest eine zweite Rücksaugsystem 31.

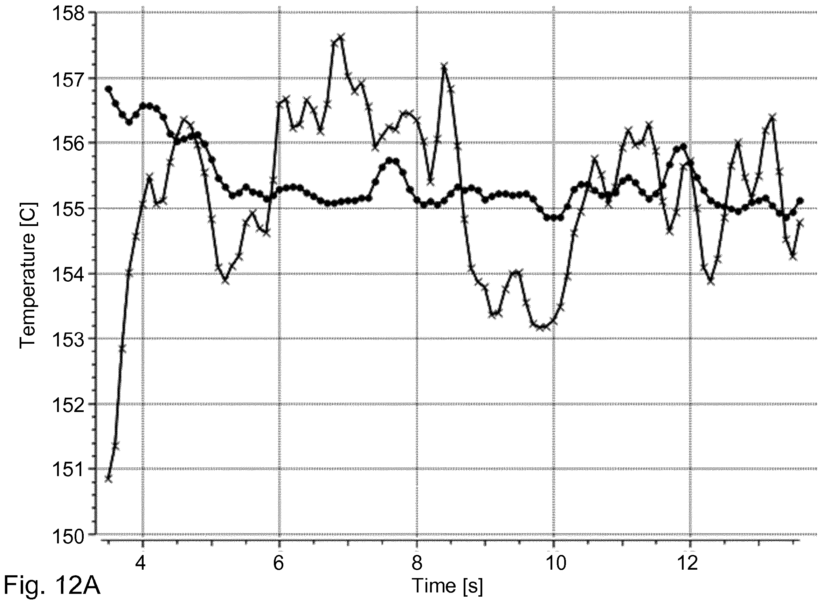

In Figur 12A sind zwei Verläufe einer gemittelten Temperatur der Kunststofffolienbahn 2 über die Zeit gezeigt. Die Verläufe können durch Messungen oder Simulationen (= Errechnen der Messwerte) ermittelt werden. Die Temperatur ist gemittelt über die Breite der Kunststofffolienbahn 2 zum jeweiligen Zeitpunkt am Folien-Austrittsbereich 6b des Belüftungsmoduls 3. Die Temperatur ist gemittelt über die Breite der Kunststofffolienbahn 2 und wird durch mehrere Sensoren (zwischen 2 und 30 Sensoren) erfasst, die über die Breite der Kunststofffolienbahn 2 beabstandet angeordnet sind. Beispielsweise werden deren Messwerte addiert und durch die Anzahl der Messwerte dividiert. Die mit Punkten versehene Messkurve ergibt sich bei Einsatz des erfindungsgemäßen Belüftungsmoduls 3. Die mit Kreuzen versehene Messkurve wird bei Einsatz von Belüftungsmodulen aus dem Stand der Technik erreicht. Zu erkennen ist, dass die Temperaturschwankungen über die Zeit bei Einsatz des erfindungsgemäßen Belüftungsmoduls 3 deutlich geringer sind und die Folieneigenschaften daher konstanter gehalten werden können.

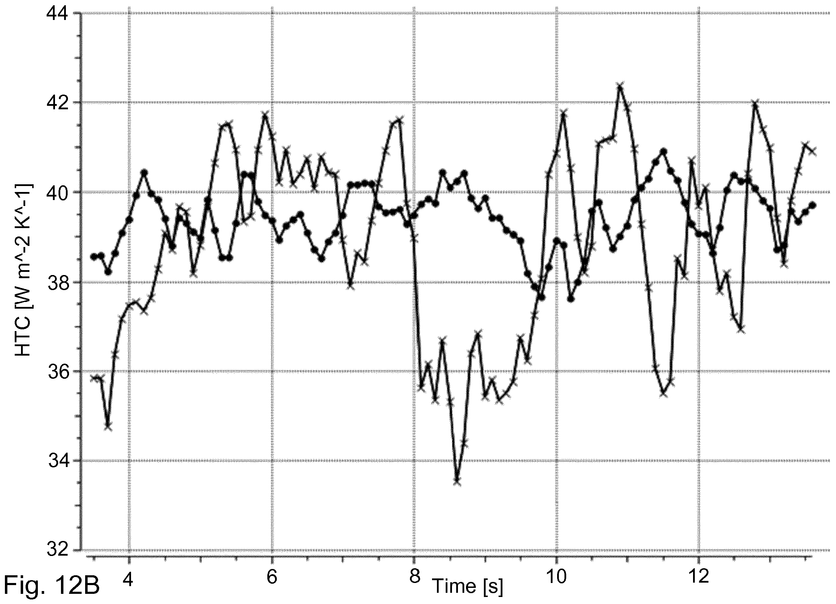

Figur 12B zeigt den mittleren Wärmeübergangskoeffizienten eines gesamten betrachteten Belüftungsmoduls 3 auf die Kunststofffolienbahn 2 über die Zeit, welcher gleich zu setzen ist mit dem zeitlichen Verlauf des flächigen WÜK-Mittelwertes des Belüftungsmoduls 3. Die mit Punkten versehene Messkurve ergibt sich bei Einsatz des erfindungsgemäßen Belüftungsmoduls 3. Die mit Kreuzen versehene Messkurve wird bei Einsatz von Belüftungsmodulen aus dem Stand der Technik erreicht. Zu erkennen ist, dass Schwankungen des mittleren Wärmeübergangskoeffizienten über die Zeit bei Einsatz des erfindungsgemäßen Belüftungsmoduls 3 deutlich geringer sind und die Folieneigenschaften daher konstanter gehalten werden können.

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar.

## Patentansprüche

1. Belüftungsmodul (3) für eine Folienreckanlage (1) zur Erwärmung oder Kühlung von Kunststofffolienbahnen (2) mit den folgenden Merkmalen:
- das Belüftungsmodul (3) umfasst einen Folien-Einzugsbereich (6a) und einen Folien-Austrittsbereich (6b), wobei die Kunststofffolienbahn (2) in Abzugsrichtung (4) innerhalb des Belüftungsmoduls (3) in einer Transportebene (7) vom Folien-Einzugsbereich (6a) in Richtung des Folien-Austrittsbereichs (6b) bewegbar ist;
- zwischen dem Folien-Einzugsbereich (6a) und dem Folien-Austrittsbereich (6b) ist zumindest eine erste Ausblasdüsenanordnung (8) vorgesehen, die dazu ausgebildet ist, Luft zum Erwärmen oder Kühlen in Richtung der Kunststofffolienbahn (2) zu blasen;
- die zumindest eine erste Ausblasdüsenanordnung (8) umfasst zumindest eine Ausblasdüse (8a), wobei sich die zumindest eine Ausblasdüse (8a) mit ihrer Längsrichtung (5) quer oder senkrecht zur Abzugsrichtung (4) der Kunststofffolienbahn (2) erstreckt und parallel zur Transportebene (7) ausgerichtet ist;
- es ist zumindest ein erstes Rücksaugsystem (9) mit zumindest zwei Absaugkanälen (10a, 10b) vorgesehen, die jeweils einen Ansaugbereich (11a, 11b) aufweisen, wobei das zumindest eine erste Rücksaugsystem (9) dazu ausgebildet ist, Luft über die Absaugkanäle (10a, 10b) abzusaugen;
- das zumindest eine erste Rücksaugsystem (9) ist zwischen dem Folien-Einzugsbereich (6a) und dem Folien-Austrittsbereich (6b) angeordnet;
- die zumindest eine Ausblasdüse (8a) der zumindest einen ersten Ausblasdüsenanordnung (8) und die zumindest beiden Ansaugbereiche (11a, 11b) sind auf derselben Seite der Transportebene (7) angeordnet;
- die zumindest beiden Ansaugbereiche (11a, 11b) sind in Abzugsrichtung (4) voneinander beabstandet und parallel zur Transportebene (7) ausgerichtet, wobei sich die zumindest beiden Ansaugbereiche (11a, 11b) mit ihrer Längsrichtung (5) quer oder senkrecht zur Abzugsrichtung (4) der Kunststofffolienbahn (2) erstrecken;
- die zumindest eine Ausblasdüse (8a) der zumindest einen ersten Ausblasdüsenanordnung (8) ist zwischen dem ersten und dem zweiten Ansaugbereich (11a, 11b) derart angeordnet, dass der zumindest eine erste Ansaugbereich (11a) in Abzugsrichtung (4) der Kunststofffolienbahn (2) ausschließlich vor und der zumindest eine zweite Ansaugbereich (11b) in Abzugsrichtung (4) der Kunststofffolienbahn (2) ausschließlich nach der zumindest einen Ausblasdüse (8a) angeordnet;
- **dadurch gekennzeichnet, dass** die zumindest eine erste Ausblasdüsenanordnung (8) mehrere Düsenkästen (20b, 20c, 20d, 20e, 20f) umfasst;
- und zwischen zwei Düsenkästen (20a, 20b, 20c, 20d, 20e, 20f) oder beabstandet von zwei Düsenkästen (20a, 20b, 20c, 20d, 20e, 20f) sich eine überwiegend oder vollständig luftundurchlässige Deckplattenanordnung (25) befindet, welche Deckplattenanordnung (25) parallel zur Transportebene (7) verläuft, wodurch zwei benachbarte Ansaugbereiche (11a, 11b) verschiedener Ausblasdüsen (8a, 8b, 8c, 8d, 8e, 8f) in ihrer Erstreckung begrenzt sind.

2. Belüftungsmodul (3) nach Anspruch 1, **gekennzeichnet durch** das folgende Merkmal:
- die beiden Ansaugbereiche (11a, 11b) weisen im Überdeckungsbereich der Transportebene (7) eine gesamte Ansaugöffnungsfläche (12) auf, die 8-mal bis 14-mal größer ist als die Düsenöffnungsfläche (13) am Ausblasbereich der Ausblasdüse (8a) im Überdeckungsbereich der Transportebene (7).

3. Belüftungsmodul (3) nach Anspruch 2, **gekennzeichnet durch** die folgenden Merkmale:
- die gesamte Ansaugöffnungsfläche (12) des ersten und zweiten Ansaugbereichs (11a, 11b) ist im Überdeckungsbereich der Transportebene (7) 8-mal oder mehr als 8-mal, 9-mal, 10-mal, 11-mal, 12-mal oder mehr als 13-mal so groß als die gesamte Düsenöffnungsfläche (13) der Ausblasdüse (8a) im Überdeckungsbereich der Transportebene (7); und/oder
- die gesamte Ansaugöffnungsfläche (12) des ersten und zweiten Ansaugbereichs (11a, 11b) ist 14-mal oder weniger als 14-mal, 13-mal, 12-mal, 11-mal, 10-mal oder weniger als 9-mal so groß als die gesamte Düsenöffnungsfläche (13) der Ausblasdüse (8a) im Überdeckungsbereich der Transportebene (7).

4. Belüftungsmodul (3) nach einem der vorherigen Ansprüche, **gekennzeichnet durch** die folgenden Merkmale:
- die zumindest beiden Ansaugbereiche (11a, 11b) sind in Abzugsrichtung (4) der Kunststofffolienbahn (2) in einem Abstand vor bzw. nach der zumindest einen ersten Ausblasdüsenanordnung (8) angeordnet, der weniger als 100cm, 90 cm, 80 cm, 70 cm, 60 cm, 50 cm, 40cm, 30 cm, 20 cm oder weniger als 10 cm beträgt; und/oder
- das zumindest ein erste Rücksaugsystem (9) ist dazu ausgebildet, über die zumindest beiden Ansaugbereiche (11a, 11b) mindestens 80%, 85%, 90% oder 95% des Luftvolumenstroms abzusaugen, der über die zumindest eine erste Ausblasdüsenanordnung (8) ausblasbar ist.

5. Belüftungsmodul (3) nach einem der vorherigen Ansprüche, **gekennzeichnet durch** die folgenden Merkmale:
- die Ansaugöffnungsfläche (12a) des ersten Ansaugbereichs (11a) ist in etwa so groß wie die Ansaugöffnungsfläche (12b) des zweiten Ansaugbereichs (11b); oder
- die Ansaugöffnungsfläche (12a, 12b) des ersten und des zweiten Ansaugbereichs (11a, 11b) unterscheiden sich um weniger als 30%, 25%, 20%, 15%, 10% oder um weniger als 5% voneinander.

6. Belüftungsmodul (3) nach einem der vorherigen Ansprüche, **gekennzeichnet durch** das folgende Merkmal:
- an der zumindest einen Ausblasdüse (8a) der zumindest einen ersten Ausblasdüsenanordnung (8) ist eine Leitplattenanordnung (60) angebracht, die weiter in Richtung der Transportebene (7) vorsteht als die zumindest eine Ausblasdüse (8a), wobei sich die Leitplattenanordnung (60) in Längsrichtung (5) der zumindest einen Ausblasdüse (8a) erstreckt.

7. Belüftungsmodul (3) nach einem der vorherigen Ansprüche, **gekennzeichnet durch** die folgenden Merkmale:
- zwei Düsenkästen (20a, 20b, 20c, 20d, 20e, 20f) sind unter Bildung eines Abstandsraums (28) benachbart zueinander angeordnet;
- ein Absaugkanal (10a, 10b) von einem an jedem Düsenkasten (20a, 20b, 20c, 20d, 20e, 20f) angeordneten Ansaugbereich (11a, 11b) verläuft durch den Abstandsraum (28), wobei die Deckplattenanordnung (25) mittels Abstandshalter (29) an zwei Düsenkästen (20a, 20b, 20c, 20d, 20e, 20f) befestigt ist und in Richtung der Transportebene (7) vorsteht.

8. Belüftungsmodul (3) nach einem der vorherigen Ansprüche, **gekennzeichnet durch** das folgende Merkmal:
- die Deckplattenanordnung (25) ist gleich weit von der Transportebene (7) beabstandet wie die benachbarten Ausblasdüsen (8a, 8b, 8c, 8d, 8e, 8f).

9. Belüftungsmodul (3) nach einem der vorherigen Ansprüche, **gekennzeichnet durch** das folgende Merkmal:
- die jeweiligen Ansaugbereiche (11a, 11b) sind durch einen Abstand zwischen der Ausblasdüse (8a) und der Deckplattenanordnung (25) definiert.

10. Belüftungsmodul (3) nach einem der vorherigen Ansprüche, **gekennzeichnet durch** das folgende Merkmal:
- die Deckplattenanordnung (25) ist mittels der Abstandshalter (29) an zwei Düsenkästen (20a, 20b) befestigt und steht in Richtung der Transportebene (7) vor.

11. Belüftungsmodul (3) nach einem der vorherigen Ansprüche, **gekennzeichnet durch** das folgende Merkmal:
- die Deckplattenanordnung (25) kann eine oder mehrere Platten umfassen.

12. Belüftungsmodul (3) nach einem der vorherigen Ansprüche, **gekennzeichnet durch** das folgende Merkmal:
- die Deckplattenanordnung (25) ist mit einem Abstandshalter (29) angebracht oder direkt auf die jeweiligen Düsenkästen (20a, 20b bzw. 20b, 20c bzw. 20c, 20d) aufgesetzt bzw. mit diesen verschraubt oder fest verbunden.

13. Belüftungsmodul (3) nach einem der vorherigen Ansprüche, **gekennzeichnet durch** das folgende Merkmal:
- die Deckplattenanordnung (25) erstreckt sich zumindest über die Breite des Abstandsraums (28) und über die Breite der Kunststofffolienbahn (2), sodass die Luft weit überwiegend, nämlich zu mehr als 80% oder ausschließlich an den jeweiligen Ansaugbereichen (11a, 11b) absaugbar ist.

14. Folienreckanlage (1) zur Herstellung von Kunststofffolienbahnen mit einem Belüftungsmodul (3) oder mehreren Belüftungsmodulen (3), das oder die nach einem der vorherigen Ansprüche aufgebaut ist oder sind.

15. Folienreckanlage (1) zur Herstellung von Kunststofffolienbahnen (2) mit mehreren Belüftungsmodulen (3) nach Anspruch 14, **gekennzeichnet durch** die folgenden Merkmale:
- alle Belüftungsmodule (3) sind identisch aufgebaut; oder
- zumindest zwei Belüftungsmodule (3) unterscheiden sich in der Anzahl der Ausblasdüsen (8a bis 8h) ihrer zumindest einen ersten Ausblasdüsenanordnung (8), wobei die gesamte Düsenöffnungsfläche aller Ausblasdüsen (8a bis 8h) der zumindest einen ersten Ausblasdüsenanordnung (8) des einen Belüftungsmoduls (3) in etwa der gesamten Düsenöffnungsfläche aller Ausblasdüsen (8a bis 8c) der zumindest einen ersten Ausblasdüsenanordnung (8) des anderen Belüftungsmoduls (3) entspricht.

## Claims

1. A ventilation module (3) for a film stretching system (1) for heating or cooling plastic film webs (2) having the following features:
- the ventilation module (3) comprises a film entry region (6a) and a film exit region (6b), the plastic film web (2) being movable in the withdrawal direction (4) within the ventilation module (3) in a transport plane (7) from the film entry region (6a) in the direction of the film exit region (6b);
- at least one first outlet nozzle arrangement (8) is provided between the film entry region (6a) and the film exit region (6b) and is designed to blow air in the direction of the plastic film web (2) for the purpose of heating or cooling;
- the at least one first outlet nozzle arrangement (8) comprises at least one outlet nozzle (8a), the at least one outlet nozzle (8a) extending with its longitudinal direction (5) transverse or perpendicular to the withdrawal direction (4) of the plastic film web (2) and being oriented in parallel to the transport plane (7);
- at least one first return system (9) having at least two extraction channels (10a, 10b) is provided, which extraction channels each have an intake region (11a, 11b), the at least one first return system (9) being designed to extract air via the extraction channels (10a, 10b);
- the at least one first return system (9) is arranged between the film entry region (6a) and the film exit region (6b);
- the at least one outlet nozzle (8a) of the at least one first outlet nozzle arrangement (8) and the at least two intake regions (11a, 11b) are arranged on the same side of the transport plane (7);
- the at least two intake regions (11a, 11b) are distanced from one another in the withdrawal direction (4) and are oriented in parallel to the transport plane (7), the at least two intake regions (11a, 11b) extending with their longitudinal direction (5) transverse or perpendicular to the withdrawal direction (4) of the plastic film web (2);
- the at least one outlet nozzle (8a) of the at least one first outlet nozzle arrangement (8) is arranged between the first and the second intake region (11a, 11b) in such a way that the at least one first intake region (11a) is arranged in the withdrawal direction (4) of the plastic film web (2) exclusively before the at least one outlet nozzle (8a), and the at least one second intake region (11b) in the withdrawal direction (4) of the plastic film web (2) is arranged exclusively after the at least one outlet nozzle (8a), **characterized in that**
the at least one first outlet nozzle arrangement (8) comprises a plurality of nozzle boxes (20b, 20c, 20d, 20e, 20f); and
- a predominantly or completely air-impermeable cover plate arrangement (25), which runs in parallel to the transport plane (7), is situated between two nozzle boxes (20a, 20b, 20c, 20d, 20e, 20f) or at a distance from two nozzle boxes (20a, 20b, 20c, 20d, 20e, 20f), whereby two adjacent intake regions (11a, 11b) of different outlet nozzles (8a, 8b, 8c, 8d, 8e, 8f) are delimited in respect of their extent.

2. The ventilation module (3) according to claim 1, **characterised by** the following feature:
- the two intake regions (11a, 11b) in the region of overlap with the transport plane (7) have a total intake opening area (12) which is 8 times to 14 times greater than the nozzle opening area (13) at the outlet region of the outlet nozzle (8a) in the region of overlap with the transport plane (7).

3. The ventilation module (3) according to claim 2, **characterised by** the following features:
- the total intake opening area (12) of the first and second intake region (11a, 11b), in the region of overlap with the transport plane (7), is 8 times or more than 8 times, 9 times, 10 times, 11 times, 12 times or more than 13 times greater than the total nozzle opening area (13) of the outlet nozzle (8a) in the region of overlap with the transport plane (7); and/or
- the total intake opening face (12) of the first and second intake region (11a, 11b) is 14 times or less than 14 times, 13 times, 12 times, 11 times, 10 times or less than 9 times larger than the total nozzle opening area (13) of the outlet nozzle (8a) in the region of overlap with the transport plane (7).

4. The ventilation module (3) according to any one of the preceding claims, **characterised by** the following features:
- the at least two intake regions (11a, 11b) are arranged in the withdrawal direction (4) of the plastic film web (2) at a distance before and after the at least one outlet nozzle arrangement (8) which is less than 100 cm, 90 cm, 80 cm, 70 cm, 60 cm, 50 cm, 40 cm, 30 cm, 20 cm or less than 10 cm; and/or
- the at least one first return system (9) is designed to extract, via the at least two intake regions (11a, 11b), at least 80%, 85%, 90% or 95% of the air volume flow that is extractable via the at least one first outlet nozzle arrangement (8).

5. The ventilation module (3) according to any one of the preceding claims, **characterised by** the following features:
- the intake opening area (12a) of the first intake region (11a) is approximately the same size as the intake opening area (12b) of the second intake region (11b); or
- the intake opening area (12a, 12b) of the first and second intake region (11a, 11b) differ by less than 30%, 25%, 20%, 15%, 10% or by less than 5% from one another.

6. The ventilation module (3) according to any one of the preceding claims, **characterised by** the following feature;
- a guide plate arrangement (60) is mounted on the at least one outlet nozzle (8a) of the at least one first outlet nozzle arrangement (8), which guide plate arrangement protrudes in the direction of the transport plane (7) further than the at least one outlet nozzle (8a), with the guide plate arrangement (60) extending in the longitudinal direction (5) of the at least one outlet nozzle (8a).

7. The ventilation module (3) according to any one of the preceding claims, **characterised by** the following features:
- two nozzle boxes (20a, 20b, 20c, 20d, 20e, 20f) are arranged adjacently to one another so as to form a gap (28);
- an extraction channel (10a, 10b) runs from an intake region (11a, 11b) arranged on each nozzle box (20a, 20b, 20c, 20d, 20e, 20f), through the gap (28), the cover plate arrangement (25) being secured to two nozzle boxes (20a, 20b, 20c, 20d, 20e, 20f) by means of spacers and protruding in the direction of the transport plane (7).

8. The ventilation module (3) according to any one of the preceding claims, **characterised by** the following feature:
- the cover plate arrangement (25) is distanced from the transport plane (7) by the same distance as the adjacent outlet nozzles (8a, 8b, 8c, 8d, 8e 8f).

9. The ventilation module (3) according to any one of the preceding claims, **characterised by** the following feature:
- the respective intake regions (11a, 11b) are defined by a distance between the outlet nozzle (8a) and the cover plate arrangement (25).

10. The ventilation module (3) according to any one of the preceding claims, **characterised by** the following feature:
- the cover plate arrangement (25) is mounted to two nozzle boxes (20a, 20b) by means of a spacer (29) and protrudes in the direction of the transport plane (7).

11. The ventilation module (3) according to any one of the preceding claims, **characterised by** the following feature:
- the cover plate arrangement (25) can include one or more plates.

12. The ventilation module (3) according to any one of the preceding claims, **characterised by** the following feature:
- the cover plate arrangement (25) is attached with a spacer (29) or is placed directly on the various nozzle boxes (20a, 20b or 20b, 20c or 20c 20d), or screwed or fixedly connected thereto, respectively.

13. The ventilation module (3) according to any one of the preceding claims, **characterised by** the following feature:
- the cover plate arrangement (25) extends at least over the width of the gap 28 and over the width of the plastic film web 2, so that the air is extracted largely predominantly, namely more than 80% of the air or exclusively at the intake regions (11a, 11b).

14. A film stretching system (1) for producing plastic film webs, comprising one ventilation module (3) or a plurality of ventilation modules (3) which is or are constructed in accordance with one of the preceding claims.

15. The film stretching system (1) for producing plastic film webs (2) comprising a plurality of ventilation modules (3) according to claim 14, **characterised by** the following features:
- all ventilation modules (3) are constructed identically; or
- at least two ventilation modules (3) differ in respect of the number of outlet nozzles (8a to 8h) of their at least one first outlet nozzle arrangement (8), the entire nozzle opening area of all outlet nozzles (8a to 8) of the at least one first outlet nozzle arrangement (8) of one ventilation module (3) corresponding to approximately the entire nozzle opening area of all outlet nozzles (8a to 8c) of the at least one first outlet nozzle arrangement (8) of the other ventilation module (3).

## Revendications

1. Module de ventilation (3) pour un système d'étirage de film (1) pour chauffer ou refroidir des bandes de film plastique (2), présentant les particularités suivantes :
- le module de ventilation (3) comprend une zone d'admission de film (6a) et une zone de sortie de film (6b), la bande de film plastique (2) étant mobile dans la direction de retrait (4) à l'intérieur du module de ventilation (3) dans un plan de transport (7) depuis la zone d'admission de film (6a) en direction de la zone de sortie de film (6b) ;
- il est prévu, entre la zone d'admission de film (6a) et la zone de sortie de film (6b), au moins un premier ensemble de buses de soufflage (8) conçu pour souffler de l'air de chauffage ou de refroidissement en direction de la bande de film plastique (2) ;
- l'au moins un premier ensemble de buses de soufflage (8) comprend au moins une buse de soufflage (8a), l'au moins une buse de soufflage (8a) s'étendant, par sa direction longitudinale (5), transversalement ou perpendiculairement à la direction de retrait (4) de la bande de film plastique (2) et étant orientée parallèlement au plan de transport (7) ;
- il est prévu au moins un premier système de recirculation (9) pourvu d'au moins deux canaux d'extraction (10a, 10b) comportant chacun une zone d'aspiration (11a, 11b), l'au moins un premier système de recirculation (9) étant conçu pour aspirer de l'air au travers des canaux d'extraction (10a, 10b) ;
- l'au moins un premier système de recirculation (9) est disposé entre la zone d'admission de film (6a) et la zone de sortie de film (6b) ;
- l'au moins une buse de soufflage (8a) de l'au moins un premier ensemble de buses de soufflage (8) et les au moins deux zones d'aspiration (11a, 11b) sont disposées du même côté du plan de transport (7) ;
- les au moins deux zones d'aspiration (11a, 11b) sont espacées l'une de l'autre dans la direction de retrait (4) et orientées parallèlement au plan de transport (7), les au moins deux zones d'aspiration (11a, 11b) s'étendant, par leur direction longitudinale (5), transversalement ou perpendiculairement à la direction de retrait (4) de la bande de film plastique (2) ;
- l'au moins une buse de soufflage (8a) de l'au moins un premier ensemble de buses de soufflage (8) est disposée entre la première et la deuxième zone d'aspiration (11a, 11b) de telle façon que l'au moins une première zone d'aspiration (11a) est disposée exclusivement en amont et que l'au moins une deuxième zone d'aspiration (11b) est disposée exclusivement en aval de l'au moins une buse de soufflage (8a) dans la direction de retrait (4) de la bande de film plastique (2) ;
- **caractérisé en ce que** l'au moins un premier ensemble de buses de soufflage (8) comprend plusieurs boîtes à buses (20b, 20c, 20d, 20e, 20f) ;
- et entre deux boîtes à buses (20a, 20b, 20c, 20d, 20e, 20f) ou à l'écart de deux boîtes à buses (20a, 20b, 20c, 20d, 20e, 20f) se trouve un ensemble à plaque de recouvrement (25) essentiellement ou totalement imperméable à l'air, lequel ensemble à plaque de recouvrement (25) est parallèle au plan de transport (7), deux zones d'aspiration (11a, 11b) adjacentes de différentes buses de soufflage (8a, 8b, 8c, 8d, 8e, 8f) s'en trouvant limitées dans leur étendue.

2. Module de ventilation (3) selon la revendication 1, **caractérisé par** la particularité suivante :
- les deux zones d'aspiration (11a, 11b) présentent une surface d'ouverture d'aspiration (12) totale dans la zone de chevauchement du plan de transport (7) qui est 8 à 14 fois plus grande que la surface d'ouverture de buse (13) au niveau de la zone de soufflage de la buse de soufflage (8a) dans la zone de chevauchement du plan de transport (7).

3. Module de ventilation (3) selon la revendication 2, **caractérisé par** les particularités suivantes :
- la surface d'ouverture d'aspiration (12) totale des première et deuxième zones d'aspiration (11a, 11b) est 8 fois ou plus de 8 fois, 9 fois, 10 fois, 11 fois, 12 fois ou plus de 13 fois plus grande dans la zone de chevauchement du plan de transport (7) que la surface d'ouverture de buse (13) totale de la buse de soufflage (8a) dans la zone de chevauchement du plan de transport (7) ; et/ou
- la surface d'ouverture d'aspiration (12) totale des première et deuxième zones d'aspiration (11a, 11b) est 14 fois ou moins de 14 fois, 13 fois, 12 fois, 11 fois, 10 fois ou moins de 9 fois plus grande que la surface d'ouverture de buse (13) totale de la buse de soufflage (8a) dans la zone de chevauchement du plan de transport (7).

4. Module de ventilation (3) selon l'une des revendications précédentes, **caractérisé par** les particularités suivantes :
- les au moins deux zones d'aspiration (11a, 11b) sont disposées, dans la direction de retrait (4) de la bande de film plastique (2), en amont ou en aval de l'au moins un premier ensemble de buses de soufflage (8) selon un écart inférieur à 100 cm, 90 cm, 80 cm, 70 cm, 60 cm, 50 cm, 40 cm, 30 cm, 20 cm ou inférieur à 10 cm et/ou
- l'au moins un premier système de recirculation (9) est conçu pour aspirer, par le biais des au moins deux zones d'aspiration (11a, 11b), au moins 80 %, 85 %, 90 % ou 95 % du flux volumique d'air pouvant être soufflé par l'au moins un premier ensemble de buses de soufflage (8).

5. Module de ventilation (3) selon l'une des revendications précédentes, **caractérisé par** les particularités suivantes :
- la surface d'ouverture d'aspiration (12a) de la première zone d'aspiration (11a) est approximativement aussi grande que la surface d'ouverture d'aspiration (12b) de la deuxième zone d'aspiration (11b) ; ou
- les surfaces d'ouverture d'aspiration (12a, 12b) des première et deuxième zones d'aspiration (11a, 11b) diffèrent l'une de l'autre de moins de 30 %, 25 %, 20 %, 15 %, 10 % ou moins de 5 %.

6. Module de ventilation (3) selon l'une des revendications précédentes, **caractérisé par** la particularité suivante :
- un ensemble à plaque de guidage (60) est fixé à l'au moins une buse de soufflage (8a) de l'au moins un premier ensemble de buses de soufflage (8) et fait saillie davantage en direction du plan de transport (7) que l'au moins une buse de soufflage (8a), l'ensemble à plaque de guidage (60) s'étendant dans la direction longitudinale (5) de l'au moins une buse de soufflage (8a).

7. Module de ventilation (3) selon l'une des revendications précédentes, **caractérisé par** les particularités suivantes :
- deux boîtes à buses (20a, 20b, 20c, 20d, 20e, 20f) sont disposées adjacentes l'une à l'autre en formant un espacement (28) ;
- un canal d'extraction (10a, 10b) d'une zone d'aspiration (11a, 11b) disposée au niveau de chaque boîte à buses (20a, 20b, 20c, 20d, 20e, 20f) traverse l'espacement (28), ledit ensemble à plaque de recouvrement (25) étant fixé à deux boîtes à buses (20a, 20b, 20c, 20d, 20e, 20f) au moyen d'entretoises (29) et faisant saillie en direction du plan de transport (7).

8. Module de ventilation (3) selon l'une des revendications précédentes, **caractérisé par** la particularité suivante :
- l'ensemble à plaque de recouvrement (25) est aussi éloigné du plan de transport (7) que le sont les buses de soufflage (8a, 8b, 8c, 8d, 8e, 8f) adjacentes.

9. Module de ventilation (3) selon l'une des revendications précédentes, **caractérisé par** la particularité suivante :
- les zones d'aspiration (11a, 11b) respectives sont définies par un écart entre la buse de soufflage (8a) et l'ensemble à plaque de recouvrement (25).

10. Module de ventilation (3) selon l'une des revendications précédentes, **caractérisé par** la particularité suivante :
- l'ensemble à plaque de recouvrement (25) est fixé à deux boîtes à buses (20a, 20b) au moyen d'entretoises (29) et fait saillie en direction du plan de transport (7).

11. Module de ventilation (3) selon l'une des revendications précédentes, **caractérisé par** la particularité suivante :
- l'ensemble à plaque de recouvrement (25) peut comprendre une ou plusieurs plaques.

12. Module de ventilation (3) selon l'une des revendications précédentes, **caractérisé par** la particularité suivante :
- l'ensemble à plaque de recouvrement (25) est fixé à l'aide d'une entretoise (29) ou placé directement sur les boîtes à buses (20a, 20b ou 20b, 20c ou 20c, 20d) respectives ou vissé ou solidement raccordé à celles-ci.

13. Module de ventilation (3) selon l'une des revendications précédentes, **caractérisé par** la particularité suivante :
- l'ensemble à plaque de recouvrement (25) s'étend au moins sur la largeur de l'espacement (28) et sur la largeur de la bande de film plastique (2) de façon que l'air peut être extrait majoritairement, à savoir à plus de 80 %, ou exclusivement au niveau des zones d'aspiration (11a, 11b) respectives.

14. Installation d'étirage de film (1) pour la production de bandes de film plastique comportant un ou plusieurs modules de ventilation (3) construits selon l'une des revendications précédentes.

15. Installation d'étirage de film (1) pour la production de bandes de film plastique (2) comportant plusieurs modules de ventilation (3) selon la revendication 14, **caractérisée par** les particularités suivantes :
- tous les modules de ventilation (3) sont construits de manière identique ; ou
- au moins deux modules de ventilation (3) diffèrent par le nombre de buses de soufflage (8a à 8h) de leur au moins un premier ensemble de buses de soufflage (8), la surface d'ouverture de buse totale de toutes les buses de soufflage (8a à 8h) de l'au moins un premier ensemble de buses de soufflage (8) de l'un des modules de ventilation (3) correspondant approximativement à la surface d'ouverture de buse totale de toutes les buses de soufflage (8a à 8c) de l'au moins un premier ensemble de buses de soufflage (8) de l'autre des modules de ventilation (3).
